(19) Europäisches Patentamt
European Patent Office
Office européen des brevets

(11) **EP 1 221 143 B1**

(12) **EUROPEAN PATENT SPECIFICATION**

(45) Date of publication and mention
of the grant of the patent:
**24.12.2008   Bulletin 2008/52**

(51) Int Cl.:
*G07B 17/00* (2006.01)          *G06K 15/02* (2006.01)

(21) Application number: **00959608.1**

(86) International application number:
**PCT/US2000/023795**

(22) Date of filing: **29.08.2000**

(87) International publication number:
**WO 2001/016889 (08.03.2001 Gazette 2001/10)**

(54) **VIRTUAL PAGE PRINTING OF INDICIA, LOGOS AND GRAPHICS**

VIRTUELLES SEITEN DRUCKEN VON ZEICHEN, LOGOS UND GRAPHISCHEN

IMPRESSION VIRTUELLE D'EMPREINTES, DE LOGOS ET DE GRAPHIQUES

(84) Designated Contracting States:
**AT BE CH CY DE DK ES FI FR GB GR IE IT LI LU MC NL PT SE**

(30) Priority: **30.08.1999   US 151487 P**
           **18.10.1999   US 160034 P**

(43) Date of publication of application:
**10.07.2002   Bulletin 2002/28**

(73) Proprietor: **Stamps.Com**
**Santa Monica, CA 90405 (US)**

(72) Inventors:
• **OGG, Craig, Leonard**
  **Long Beach, CA 90807 (US)**

• **BUSSELL, Keith**
  **Los Angeles, CA 90064 (US)**

(74) Representative: **Müller, Wolfram Hubertus et al**
**Patentanwälte**
**Maikowski & Ninnemann**
**Postfach 15 09 20**
**10671 Berlin (DE)**

(56) References cited:
**EP-A- 0 360 225          EP-A- 0 923 024**
**EP-A- 0 926 630          US-A- 4 661 001**
**US-A- 4 862 386**

**Description**

FIELD OF THE INVENTION

The present invention relates generally to systems and methods for printing indicia, logos and graphics and more particularly to systems and methods for printing postal indica on envelopes.

BACKGROUND

Metered postage is a significant source of revenue for the United States Postal Service (USPS). Metered postage is generated by utilizing postage meters that print a special mark, also known as postal indicia, on mail pieces. Generally, printing postage or any value-bearing items (VBI) may be accomplished with mechanical meters or computer-based systems.

With respect to computer-based postage processing systems, the USPS under the information-based indicia program (IBIP) has published specifications for IBIP postage meters. The IBIP involves the development of new technology to produce new forms of postage. In so-called PC postage systems, a user can purchase postage credit, and print the postage in the form of PC postage onto a label or directly onto a mail piece. The PC postage includes a human readable portion, an indicia graphic and a two dimensional barcode portion. The human readable portion includes the postage value, mail class, the date, the meter number, the licensing post office that a user registered with, an optional logo and optionally also the destination zip code (required for business courtesy mail pieces.) The barcode portion is intended to help thwart fraud, and includes information about the mail piece including the destination ZIP code, the amount of postage applied, the date and time the postage was applied, the meter number and a digital signature so that the USPS can validate the authenticity of the postage.

The USPS mail automation process utilizes various scanning machines when sorting the mail. Therefore, postage indicia must be printed in a prescribed manner to permit the mail handling and optical reading equipment to properly interpret the PC postage and addressee information. Indeed, the USPS has established strict guidelines directed to the margins, label sizes, and placement of the postage indicia, as well as the size, placement, and other characteristics of the POSTNET (POStal Numeric Encoring Technique) bar codes, and any facing identification mark (FIM) on mail pieces. These guidelines are contained in the Domestic Mail Manual (DMM) and Title 39, Code of Federal Register (CFR), Part 111, and USPS Publication No. 25 "Designing Letter Mail".

To ensure that a mail piece can be properly scanned, the mail piece needs to be oriented in a pre-defined manner. Proper orientation of the mail piece is facilitated by means of a FIM barcode or a phosphorescent strip, one of which should be included on each piece of automated mail. However, a FIM in the form of a phosphorescent strip typically requires the use of a specialized envelope or label, since standard printers are unable to print a phosphorescent strip.

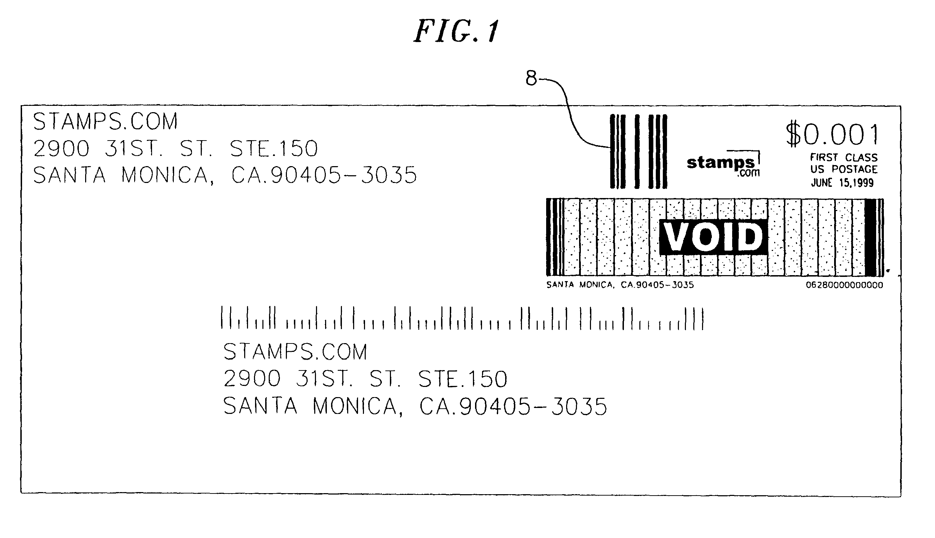

Referring to FIG. 1, a FIM barcode 8 on the other hand, is simply a pattern of vertical bars printed in the upper right area of a mail piece. Advantageously, the FIM barcode may be printed using the ink from a standard ink jet or laser jet printer. Therefore, indicia-based postage can penetrate the mainstream mass-market more easily with a FIM barcode solution.

A FIM barcode is essentially a nine-bit code consisting of bars and spaces (no-bar place holders) in which the bars corresponding to a binary one and spaces correspond to a binary zero. The FIM barcode 8 allows scanning machines to determine the orientation of individual mail pieces and the corners of both sides of the mail piece. Once the scanner has determined where the FIM barcode is on the mail piece, the mail piece may be re-oriented so that the scanner can properly read the delivery information.

The aforementioned USPS guidelines require the FIM pattern to be printed in a FIM clear zone, in which no other printing appears. The FIM clear zone is defined as a rectangular zone extending downwardly 0.625" from the upper edge of the mail piece and between 3.0" and 1.75" from the right hand edge of the mail piece.

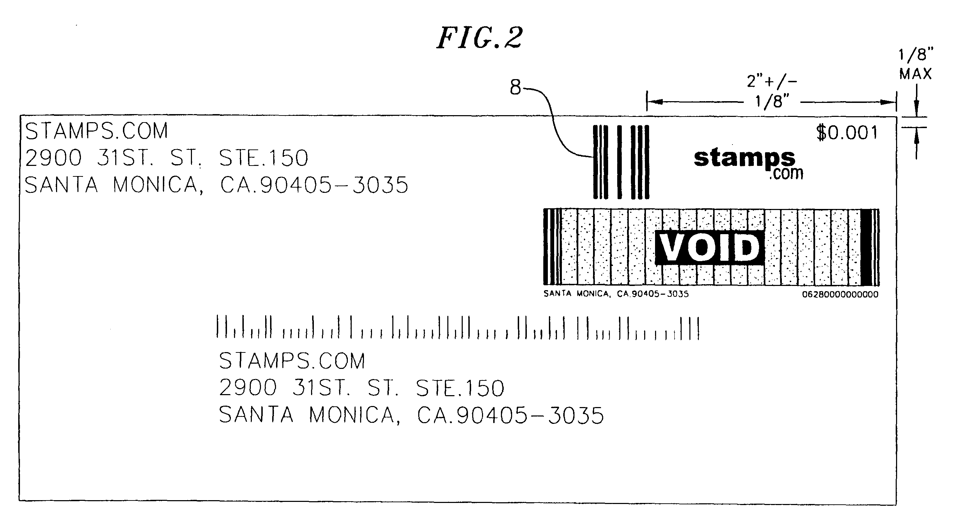

The guidelines further require the bars in the FIM barcode to be 0.625" ± 0.125" high and 0.03125" ± 0.008" wide. Referring to FIG. 2, the rightmost bar of the FIM barcode should be 2" ± 0.125" from the right edge of the mail piece. The top of the bars in the FIM barcode should be no lower than 0.125" from the top of the mail piece and the bottom of the FIM bars should touch the bottom edge of the FIM clear zone but must not be more than 0.125" above or below that edge.

Standard printers typically do not support print margins of 0.125" or less. If an envelope is fed to a printer long edge first, the distance from the FIM barcode to the edge is determined by the top margin of the print job created by the printer, which is typically well in excess of 0.125" on standard ink jet and laser jet printers. Similarly, if an envelope is fed to a printer short edge first, the distance from the FIM to the edge of the envelope is still determined by the top margin of the printer because the printer prints the envelope in landscape mode. Again, the top margin is typically greater than 0.125" on most printers Short edge feed is shown in the following diagram, the distance from the FIM barcode to the edge is determined by either the left or right side margin of the printer, which is also typically well in excess of 0.125" on most printers.

The inability of most printers to comply with the tolerances set forth for FIM barcode location in the USPS automation system may require printing indicia based postage onto labels and/or envelopes with the FIM barcode pre-printed onto them. Therefore, it would be advantageous to provide a method and system for printing text or graphics within tight edge constraints for use in postage systems that use a printer to print indicia-based postage.

U.S. Patent No. 4,862,385 discloses an apparatus for preparing a letter, including a stationary item. The apparatus includes a structure for printing and for providing a signal representative of letter data corresponding to information having a format. The information includes a plurality of parts. The apparatus also includes a computer. The computer includes a structure for receiving a signal, and is programmed for reformatting the letter data. The reformatted letter data include a plurality of parts, and each of the information parts corresponds to a different one of the data parts. The computer is also programmed for selecting at least one of the data parts and for causing the printing structure to print on the stationary item each information part corresponding to each selected data part.

SUMMARY OF THE INVENTION

The invention provides for a method of printing postal indicia onto a print media including determining a printer offset as a function of how the mail piece is fed into the printer, generating a virtualized sheet in accordance with the fize of the print media, mapping an image of said postal indicia onto the virtualized sheet; performing a margin requirement test on the mapped image; generating a print job for the virtualized sheet if the margin requirement test is satisfied, wherein the image of said postal indicia is located within a printable region of the virtualized sheet as a function of the printer offset and printing the postal indicia onto the mail piece.

The invention further provides for a system for printing postal indicia comprising means for determining a printer offset as a function of how an envelope is fed for printing; means for generating a virtualized sheet in accordance with the size of the envelope, means for mapping an image of said postal indicia onto the virtualized sheet; means for performing a margin requirement test on the mapped image; means for generating a print job for the virtualized sheet if the margin requirement test is satisfied, wherein an image of said postal indicia is located within a printable region of the virtualized sheet as a function of said printer offset; and a printer for printing said postal indicia onto said envelope.

Preferably, the method for printing postal indicia onto print media includes generating a print job for a virtualized sheet having an image of the postal indicia located within a printable region of the virtualized sheet as a function of how the envelope is fed into a printer, performing a margins requirements test, and transmitting the print job to the printer to print the postal indicia as a function of the margin requirements test. The system may also rotate the envelope image as a function of the margin requirements test.

Preferably, the method for printing information onto a print media includes generating a print job for a virtualized sheet, wherein an image to be printed on the print media is located within a printable region of the virtualized sheet as a function of printing the image closer to one or more edges of the print media than otherwise allowed by a printer for the print media.

BRIEF DESCRIPTION OF THE DRAWINGS

These and other features, aspects, and advantages of the present invention will become better understood with regard to the following description, appended claims, and accompanying drawings where:

FIG. 1 is a plan view of an envelope with a barcode printed in accordance with USPS requirements in the upper right hand corner of the envelope;

FIG. 2 is a plan view of an envelope demonstrating the USPS requirements for FIM barcode placement;

FIG. 3A is a block diagram of an Internet client/server environment used by an on-line postage system in one embodiment of the present invention;

FIG. 3B is a simplified block diagram illustrating the table used in client and server based printer databases in accordance with an exemplary embodiment;

FIG. 4 is a capture of an exemplary print postage dialog screen for a single recipient in accordance with an exemplary embodiment ;

FIG. 5 is a capture of an exemplary print prompt screen that allows a user to edit the properties of the selected printer and decide whether to print sample or actual postage in accordance with an exemplary embodiment;

FIG. 6 is a capture of an exemplary print postage dialog screen for multiple recipients in accordance with an exemplary embodiment;

FIG. 7 is a capture of an exemplary envelope options screen in accordance with an exemplary embodiment;

FIG. 8 is a plan view of an envelope with a graphic included in the return address area in accordance with an exemplary embodiment;

FIG. 9 is a flow chart demonstrating a process for printing postal indicia on envelopes in accordance with an exemplary embodiment of the present invention;

FIG. 10 is a plan view of an envelope demonstrating a virtualization process that reformats an envelope print job into a print job for a virtual sheet of paper in accordance with an exemplary embodiment of the present invention;

FIG. 11 demonstrates a page layout determining the printable region for a virtualized sheet in accordance with an exemplary embodiment of the present invention;

FIG. 12 demonstrates envelope feed positions for a typical printer;

FIG. 13 is a plan view of virtualized sheets demonstrating offsets of the printable region in accordance with an exemplary embodiment of the present invention;

FIG. 14A is a plan view of an envelope with a FIM barcode printed in accordance with the USPS requirements which defines distinct sections between the right hand edge of the envelope and the FIM barcode;

FIG. 14B is a plan view of an envelope with a FIM barcode printed with a large right hand margin and a small logo as well as a small right hand margin and a large logo;

FIG. 15 is diagram illustrating operation of a rendering algorithm to scale the logo as a function of the aspect ratio of a printable bounding area;

FIG. 16A is a plan view of an envelope image that does not pass the margin requirements test;

FIG. 16B is a plan view of the envelope image of FIG. 16A with the image rotated 180° to satisfy the margin requirements test in accordance with an exemplary embodiment of the present invention;

FIGS. 17A, 17B and 17C are coordinate axes used for rendering an envelope image with and without image rotation;

FIG. 18 is a plan view of a page layout including a standardized axis for an envelope image without rotation in accordance with an exemplary embodiment of the present invention;

FIG. 19 is a plan view of a page layout including a standardized axis for an envelope image with rotation in accordance with an exemplary embodiment of the present invention;

FIGS. 20A-20G demonstrate image rendering for a right feed printer in accordance with an exemplary embodiment of the present invention;

FIGS. 21A-21G demonstrate image rendering for a left feed printer in accordance with an exemplary embodiment of the present invention;

FIGS. 22A-22G demonstrate image rendering for a center feed printer in accordance with an exemplary embodiment of the present invention;

FIG. 23 is a plan view of an envelope illustrating inverted graphic components of the postal indicia as result of rotating the envelope image;

FIG. 24 is a plan view of an envelope with text components and internal data representation of coordinates for an image of the graphic components of the postal indicia;

FIG. 25 is a logic flow diagram of a getting started printer setup wizard;

FIG. 26 is a capture of an exemplary select default printer screen;

FIG. 27 is a capture of an exemplary print onto screen for selecting envelope size and other print options in accordance;

FIG. 28 is a capture of an exemplary insert envelope screen that request a user to insert an envelope into the printer feeder so that a sample postage pattern may be printed print onto the envelope;

FIG. 29 is a capture of a compare sample screen wherein a user is requested to compare the sample envelope printed on the envelope to a postage displayed on an envelope on the screen;

FIG 30 is a capture of a print quality assurance (QA) screen wherein a user is requested to insert an envelope into the printer feeder so that a QA envelope may be printed;

FIG. 31 is a capture of a mail QA envelope screen reminding the user to mail the QA envelope to the USPS;

FIG. 32 is a capture of a finish screen informing the user that the set-up program has been successfully completed in accordance with an exemplary embodiment of the present invention;

FIG. 33 is a logic flow diagram of a print configuration wizard;

FIG. 34 is a capture of a test printer screen informing the user that a sample envelope will need to be printed to determine whether the user's printer can accurately print postage;

FIGS. 35-37 are diagrams illustrating a series of test patterns printed onto a test envelope to determine the printer offset in accordance with an exemplary embodiment of the present invention;

FIG. 38 is a capture of a screen asking which of a plurality of possible test patterns printed onto a test envelope;

FIG. 39 is a capture of a trouble shoot screen masking which of a plurality of possible options a user would like to select to attempt to correct problems printing FIM barcode onto an envelope in accordance with an exemplary embodiment, of the present invention; and

FIG. 40 is a capture of a screen informing the user that the current printer is unable to print FIM barcodes onto envelopes in accordance with USPS requirements in accordance with an exemplary embodiment of the present invention.

DETAILED DESCRIPTION OF THE INVENTION

An exemplary embodiment of the present invention enables postage systems to print indicia-based postage within the constraints established by the USPS. An example of such a postage system is a software-based, on-line postage system described in U.S. Patent Application No. 09/163,993 filed on September 29, 1998, by Mohan Ananda, entitled "On Line Postage System". The on-line postage system software comprises user code or client software that resides on a client system and controller code that resides on a server system. The on-line postage system allows a client to securely print a postal indicium at home, at the office, or any other desired place.

An exemplary online postage system may comprise a user system electronically connected to a server system, which in turn is connected to a USPS system. The server system is preferably capable of communicating with one or more client systems simultaneously. In operation, a licensed and registered client of the on-line postage system sends a request for authorization to print a desired amount of postage. A postal security device (PSD) server determines whether the client's account balance is sufficient to cover the requested amount of postage, and if so, communicates an authorization to the client system. The client system then sends image information for printing a postal indicium for the granted amount to a printer so that the postal indicium is printed on the print media, such as for example, an envelope, post card or label. The printed indicium appears as a two-dimensional bar code that includes a unique serial number, mail delivery point information, and the amount of postage. Once the postage information is printed on an individual piece of mail, it may be mailed and processed by the USPS.

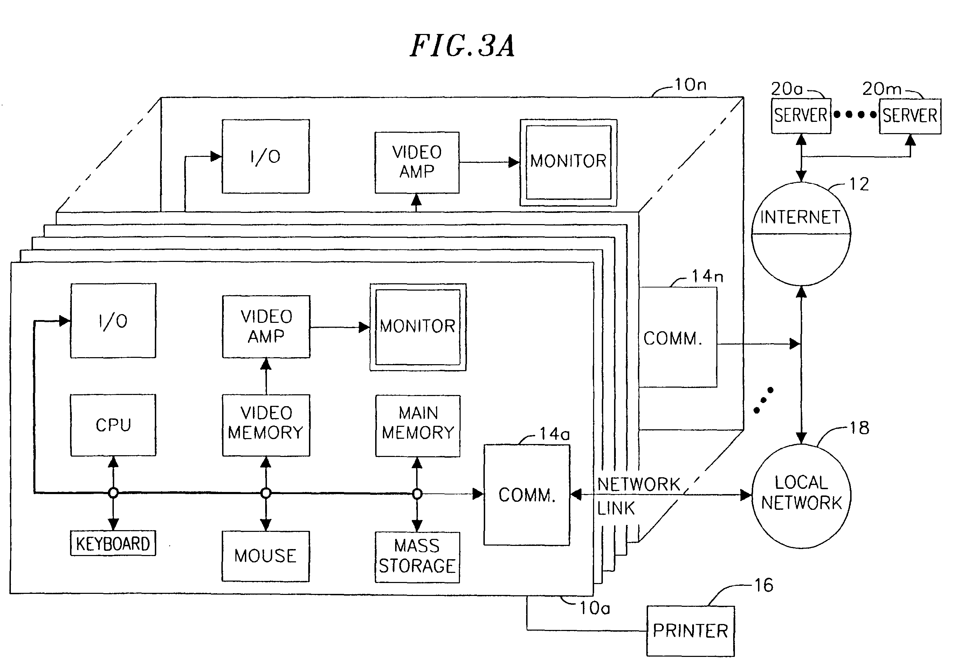

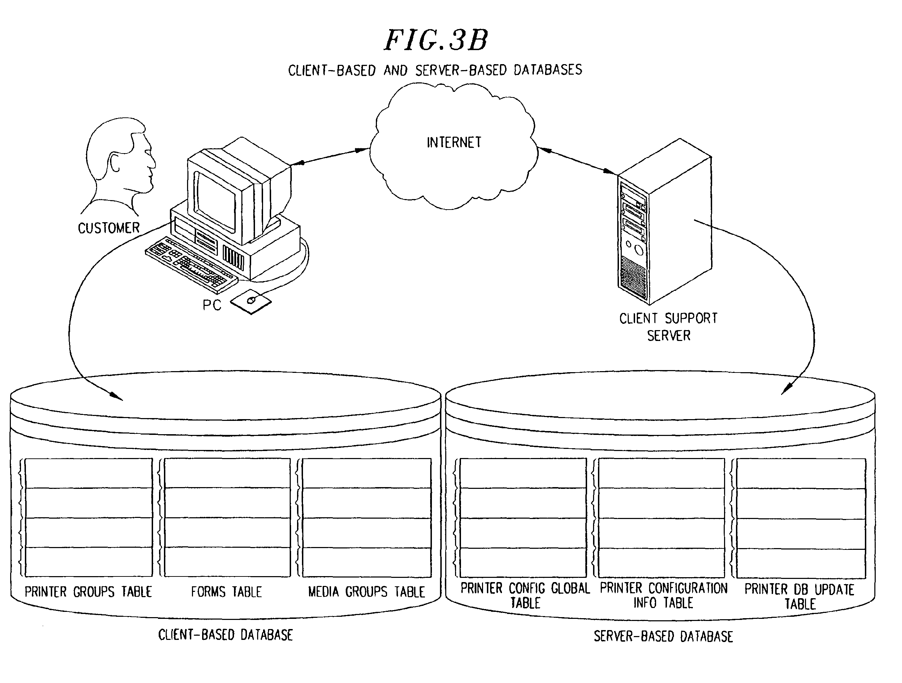

Figure 3 shows a block diagram of an exemplary Internet client/server environment used by the on-line postage system in one embodiment of the present invention. Personal computers (PCs) 10a-10n used by customers of the postage system may be connected to the Internet 12 through communication links 14a-14n. Each PC has access to a printer such as printer 16. Optionally, a local network 18 may serve as the connection between some of the PCs, such as the PC 10a and the Internet 12. servers 20a-20m are also connected to the Internet 12 through respective communication links.

Printing postal indicia requires specific information about a user's printer and its associated printer driver. The servers 20a-20m include information and server based printer databases that is accessible by the PCs 10a-10n. The server based printer database may contain information, such as for example, model number, printer-driver, print specifications (margins, etc).

Additionally, a client-based printer database, may be located on the user's machine. The client-based printer database may include a forms database that defines which media types are supported (e.g., envelopes, labels, postcards and the like) and the dimensions of each of these media. The print engine accesses the forms database to locate and print the indicium, delivery address, and return address.

Referring to FIG. 3B, when a user first tries to setup a printer with the client software, the server-based printer database is queried to determine if the user's printer driver information is contained within the database. If the printer information is in the database the required information is available and the user may continue. If the printer driver is not in the database, the user performs several tests to determine the required information with the guidance of a software wizard.

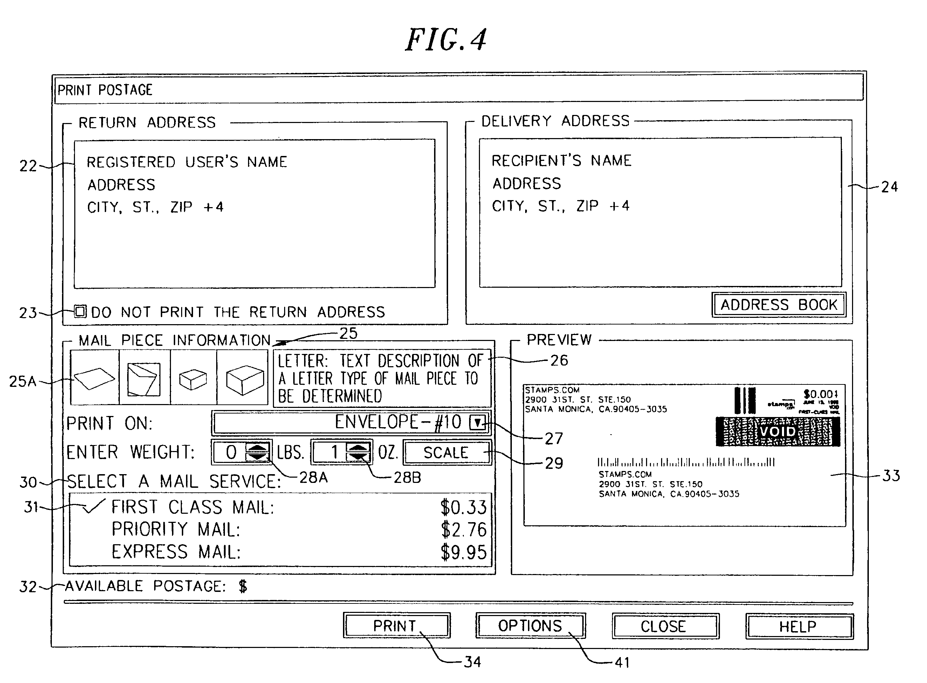

An exemplary on-line postage system preferably provides a print postage interface from which a user may define the postage that is to be printed. An exemplary print postage screen for a single recipient is shown in FIG. 4. The user may enter a return address by typing in a return address box 22. The user may omit the return address by activating a "Do not print the Return Address" option 23. The omit return address option is preferably not active by default. Similarly, a delivery address box 24 preferably allows users to enter a delivery address by typing in the delivery address box 24 or selecting an address from an address book. If a user enters an address which is not in the address book, an exemplary system preferably allows the user to enter the address in the address book. The system preferably displays the address of a single recipient in a format that is substantially the same as the format of the return address displayed in the return address window.

An exemplary print postage screen preferably provides a plurality of toggle buttons 25 that allow a user to select the type of mail piece to be sent, such as for example, a letter, flat, box or oversized box. The postage system preferably uses this information to determine what labels and/or envelopes are available to the user, and to establish the proper postage rate. A letter toggle button 25A is preferably active as the default mail piece type. A description box 26 preferably provides a brief description of the mail type that is currently selected by the mail type toggle buttons 25.

An exemplary print postage screen further includes a print on drop down box 27 which allows users to select from envelopes and labels. The items displayed in the drop down box 27 are preferably determined by the type of mail piece that was selected via the mail type toggle buttons 25. For example, if a letter is selected, only envelopes and labels approved by the USPS may be available in the print on drop down box 27. Similarly, if a flat or box is selected, only labels approved by the USPS for the selected flat or box may be available. An exemplary embodiment does not incorporate a default print onto media.

An exemplary print postage screen allows a user to enter the weight of an item to be mailed into weight fields 28A, 28B. The dimensions of the weight fields may be for example pounds and ounces. An exemplary on-line postage system preferably allows users to integrate a digital scale into the postage system. The print postage screen preferably provides an interfaces to a digital scale. A scale button 29 on the printpostage screen preferably allows for the automatic retrieval of the weight of the mail piece from the scale. The system preferably displays this weight in the enter weight fields 28A, 28B. A default weight is preferably 0 lbs., 1 oz. After the initial use, the fields preferably remember the last value.

A select service control box 30, preferably displays a plurality of available services as well as the cost of each type of service for the selected mail piece type. The prices preferably update as the user inputs information into the enter weight fields 28A, 28B. If the user is typing a value, the display may immediately update as the user types. The price may also update as a function of the delivery address of main piece. Once a user has selected a mail service, an indication, such as for example, a check mark 31 may appear adjacent to the selected service. An exemplary on line postage screen preferably does not select a default service type.

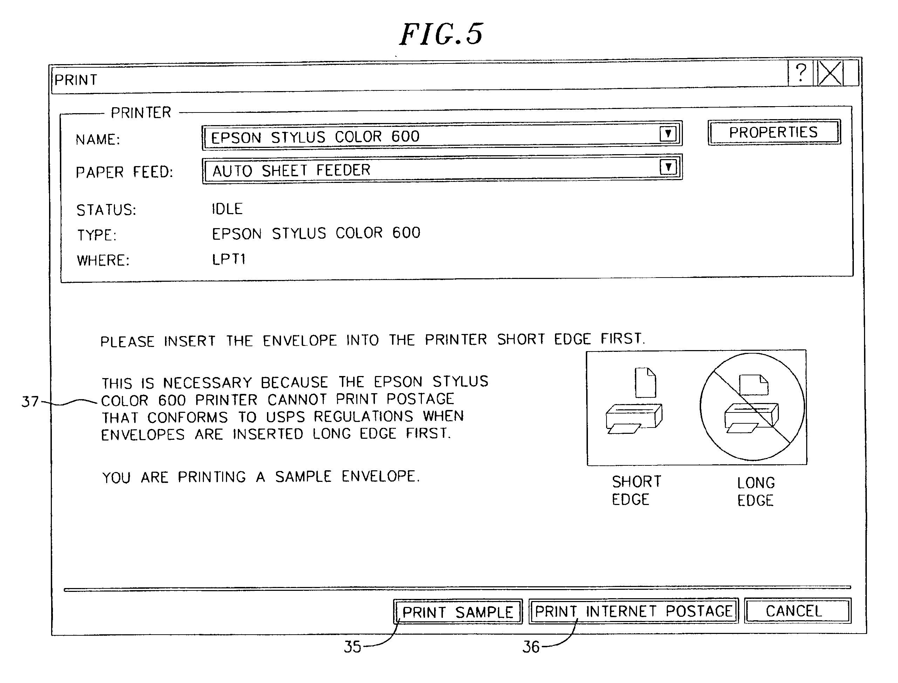

Available postage 32 (reflecting the user's account balance) is preferably displayed on the print postage screen as is a print preview window 33. The print preview window 33 is preferably updated in accordance with the media type selected in the "print onto" box 27. The selection of a print button 34 preferably advances a user to a print prompt screen as shown in FIG. 5. An exemplary print prompt screen allows a user to edit the properties of the selected printer and decide whether to print sample 35 or actual postage 36. In addition, envelope feed information 37 is preferably provided for the selected printer.

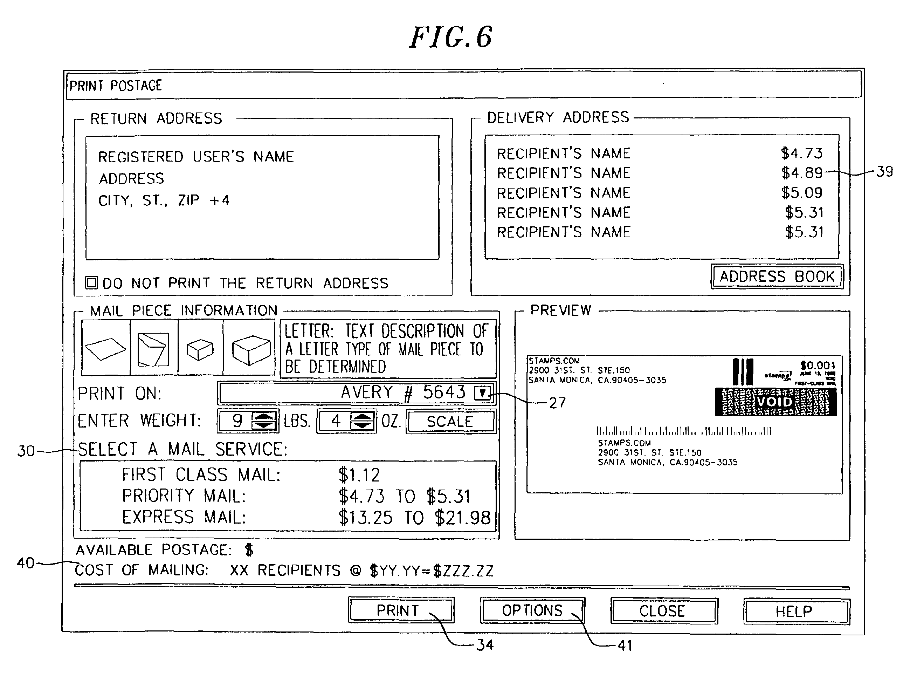

If multiple recipients and or zone based postage rates are selected, the functionality of the print postage screen may change as shown in FIG. 6. When multiple recipients are selected, each recipient is preferably displayed as a list 38 with only the name of the individual recipients displayed. In addition, when multiple recipients from multiple zones are entered or selected, the price 39 of the mail piece going to the individual recipients may be displayed next to their name. This display preferably appears after a weight that warrants zone based postage has been entered. The select a mail service dialog box 30 preferably shows a range of prices for the plurality of mailings. A cost of mailing dialog box 40 preferably appears when multiple recipients are selected. The cost of mailing dialog box 40 preferably displays the total cost for the mailing.

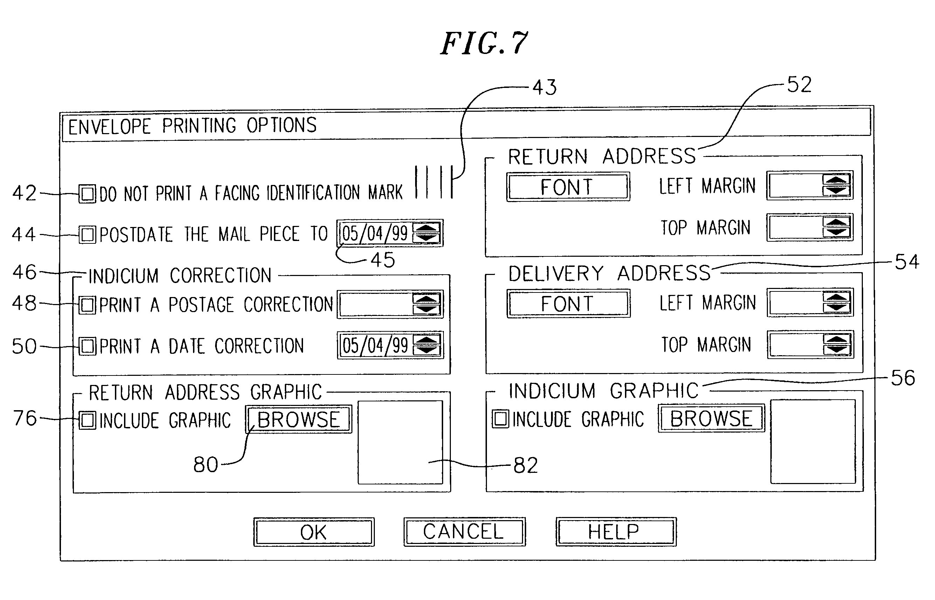

Selection of an options button 41 on the print postage screen preferably advances the user to an options dialog box, that corresponds to the media type selected in the print onto box 27. For example, if an envelope is selected in the print onto box, an envelope options screen as shown in FIG. 7 may be launched. An exemplary envelope options screen includes a control 42 to disable FIM barcode printing. This control preferably includes a graphic representation 43 of a FIM barcode to visually define the term FIM barcode. In addition, the envelope options screen preferably includes the ability to postdate a mail piece 44 by allowing a user to enter a date in a text edit box 45.

An exemplary envelope options screen further includes a plurality of indicium correction options 46, such as for example, printing corrected postage 48 or a corrected date 50. A return address graphic control 52 preferably allows the user to select a graphic to be printed with the return address. Return address adjustment controls 52 provide the ability to adjust a plurality of features including, for example, the font to be used in the return address and the margins. Delivery address adjustment controls 54 may also be included.

An exemplary envelope options screen also includes an indicium graphic control 56. The on-line postage service provider preferably controls the graphic that can be displayed within the indicium. Therefore, the online postage system preferably provides graphics for the indicium in a digitally signed format, embedded within a DLL. The system may also provide clip art that a user may browse to select the indicium graphics. The on-line system may provide for independent downloading of the DLL, so that a clip art library can be updated without forcing a complete download of the entire client software. If the DLL is nut present, this control is preferably unavailable.

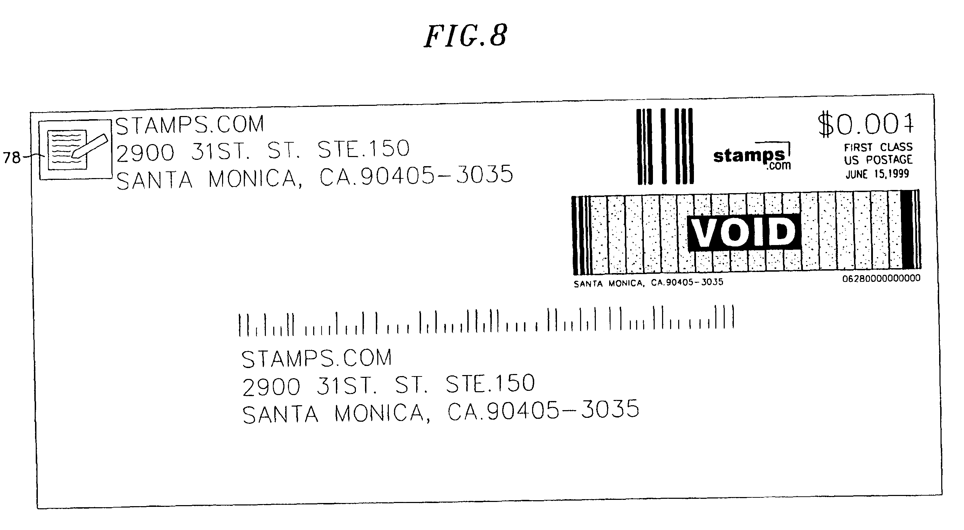

The USPS regulations indicate that users maynot incorporate a logo into the indicium without prior approval by the USPS. The USPS regulations greatly restrict a user's ability to customize the indicium. Therefore, an exemplary on-line postage service provides means by which users can customize their mail piece with a graphic file of their choosing. The envelope options screen preferably provides a return address logo control 76 which allows the user to incorporate a graphic 78 into the return address area (see FIG. 8). In an exemplary envelope options screen a logo is not incorporated into the return address area by default. A browse button 80 is preferably provided to allow a user to open a standard dialog box, from which a user may browse for and select a return address graphic. A preview window 82 provides a preview of the selected return address graphic. FIG. 8 illustrates the inclusion of a graphic 78 in the return address area of an envelope.

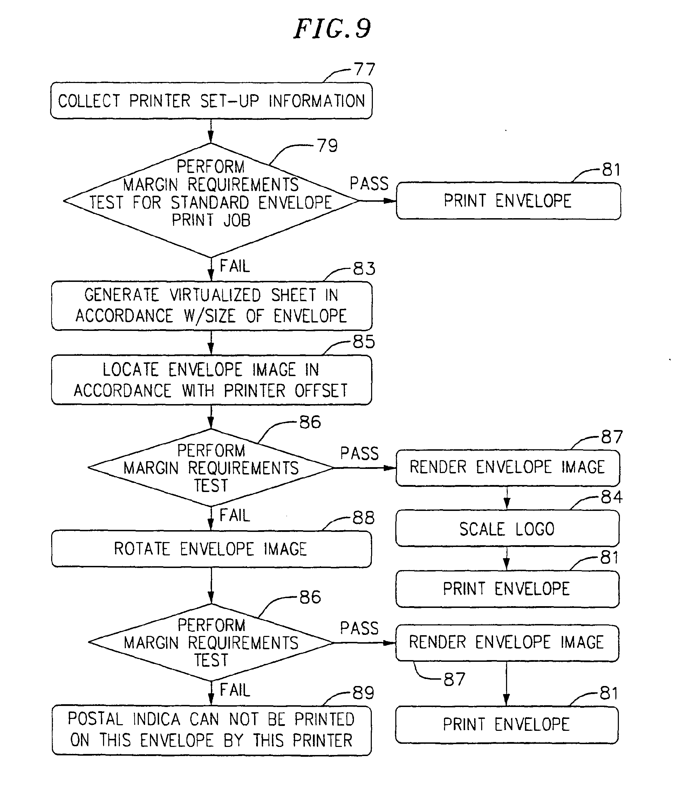

Referring to FIG. 9, the present invention utilizes a combination ofprocesses to print postal indicia onto envelopes in accordance with the regulations set forth by the USPS. In an exemplary embodiment of the present invention, the process of printing postal indicia begins with the characterization of a default printer through the collection of set-up information regarding that printer's performance characteristics and default settings 77. Set-up information may include for example, how the printer rotates into landscape mode, what print media/paper the printer supports, what feed tray options the printer supports or other default information.

In an exemplary embodiment of the present invention, the client software may gather set-up information through database queries or manually with the use of a printer configuration software wizard. An exemplary embodiment of the present invention creates a dynamic database that alleviates the need to require all users to provide specific information about their printer. The dynamic printer database may be updated for the entire user community whenever a user manually sets-up a new printer. In one embodiment, the dynamic database may be maintained on the server of the postal provider. The dynamic database may contain information, such as for example, model number, printer driver, print specifications (margins, etc) and which media the printer is allowed to support as well which media the printer is not allowed to support. This allows the postal provider to remotely control the type of media and printers that are or are not available for use.

The server-based printer database may use a plurality of tables in a user support database to store information about printer drivers. For example, a printer configuration information table may be used to store information on known printer drivers (printer drivers that have been tested successfully, either in house or by a consensus of users' results) and the print media they support. Similarly a printer global configuration table may be used to store settings that affect all printer drivers, both known and unknown, and a printer database update table may be used to store the results generated when a customer configures a previously unknown printer.

In addition to these tables, information that is specific to a customer's printers (i.e. driver version numbers, whether or not a printer has been configured, etc.) may be stored in the Registry-Each time a user logs into the postal service using the client software, a plurality of information is preferably sent to the postal service provider over the Internet. For example, the most recent date when the printer information in the Registry was updated with the printer information from the server based printer database maybe sent. In addition, the names of printer drivers and printer driver version numbers that are installed on the user's computer are also preferably sent to the postal service provider.

The latest update or server date represents the date when the server-based printer database was last updated. If the date in the Registry is more recent than this server date, then the server does not update the printer information in the client based printer database. If the date in the Registry is earlier or the same as the server date, then updated printer information from the server-based printer database may be returned to the client based printer database. The client software then preferably updates the printer information in the Registry and updates the date information with the current system date.

The latest update value is preferably updated each time the Registry information is compared with the server information. The print engine preferably uses the information in the Registry along with the aforementioned tables in the client support database to determine which printer drivers are available for use as well as the print media that may be supported by each of the available printers. If a user works offline, the client software may use Registry values without being connected to the support server to access the server-based printer database.

The printer configuration information table is the main table in the print server database. It contains information on printer drivers, such as for example, the version number, compatible operating systems, and the print media the drivers support. The printer configuration information table may also store the lowest version of the printer driver that meets all the criteria in the table. The printer engine compares the driver version number of a user's printer with the driver version(s) listed in the database. The printer engine preferably breaks up the string based on punctuation and then compares the numerical groups If letters are included in the driver version, the engine does a character by character comparison.

The printer configuration information table may also store an offset or shift code for the default paper feed tray supported by this driver. The shift code represents how the guides of the paper feed trays are moved to properly feed envelopes into the printer. The shift code tells the printer engine where to place the image on the larger virtualized sheet of paper. If the printer does not shift the image at all, this value is preferably set to zero. If the printer shifts the image to the middle of the page, this value is preferably set to one. If the printer shifts the image across the page, this value is preferably set to two. A print test may be run to determine the proper shift code.

The printer configuration information table stores a variable indicating whether a given print driver supports virtualization and printing on envelopes as well as non envelope print media such as, for example, post cards or labels. If a user attempts to print to a print medianot supported by the selected printer, the system preferably informs the user that their printer does not support the selected print media and allows the user to select a new printer or select a new point media.

The print media fields in the printer configuration information table are designed to handle cases where the majority of printer drivers support a print media. For example, while the majority of printer drivers support personal envelopes, some do not. In these instances, the personal envelope may still be an option in the "print on" list in the print postage screen. The system preferably notifies user's who attempt to print to a print media that is not supported by their printer driver, that the selected printer does not support that print media.

The printer configuration information table may also contain a horizontal page offset variable which is utilized when an image is shifted to the right or loft on a label by a minority of printers but is otherwise properly printed onto the label by a majority of printers. If this occurs, the image may be translated by the horizontal page offset variable which represents the distance that the image should be shifted to properly print on the label. Negative values may be used to move the image to the left and positive values may be used to move the image to the right.

Similarly, a vertical page offset value may be stored to compensate for printers that require the user to move one of the paper feed guides a fixed distance and then to move the other paper feed guide as needed to fit an envelope. This may result in the default shift code being reported as a one when it's realty a zero or as a two plus the distance that you are required to move the fixed paper guide. When envelopes are printed, the information maybe shifted up or down (the same distance as the fixed-distance paper feed guide) and printed incorrectly on the envelope. To compensate for this problem, the system preferably stores the distance the image should be shifted in order to print correctly. Printing on the envelope may be raised, for example, by storing a negative value and lowered by storing a positive value.

A landscape orientation variable may compensate for printer drivers that over rotate the image, which would otherwise result in the image being shifted horizontally across the page.

The printer global configuration table may be used to control printer driver settings. The setting of a global variable allows unknown printers and determines if printer drivers that are not in the database will be supported. If unknown printers are not allowed, the system preferably does not allow a user to configure an unknown printer in a getting started wizard. Rather the system preferably notifies the user that the selected printer is not supported.

Similarly, the system will not allow a user to select an unknown printer in a print postage screen. In addition, the setting of a global FIM specification mode variable, determines the distance from the top of an envelope a FIM may be printed when virtualization is not used. DMM regulations require that the FIM be no lower than 0.125" from the top of the envelope. This field maybe set to allow the FIM to print in accordance with the DMM regulations unless the regulations regarding FIM placement change.

When a client configures a printer, the results of the configuration may be saved in the printer database update table. As a result, this table contains information about both known and unknown printer drivers so that there is overlap between the fields of this table and the fields in the printer configuration information table. The information in the overlapping fields for a new printer driver may be transferred to the printer configuration information table after numerous customers, on the order of five to twenty, have successfully configured the printer driver with the same operating system, version number, and shift code.

The system preferably stores a user identification to identify the user that configured the printer driver in this record. This identification is preferably a unique number assigned to a user when they registered with the on-line postal provider. The printer database update table may store the text name of the printer driver that the user configures, the deliver version, the computer operating system used when the printer driver was configured and the date the driver was configured.

Additionally, a client based printer database preferably located on the client's machine, may include a forms database. The forms database defines which media types are supported (such as, for example, envelopes, labels, postcards and the like) and the dimensions of each of these media so that the printing engine knows where and how to print the indicium.

The forms database preferably stores one record, with a unique identification, for every print media that the system supports. The database preferably identifies the print media as being either an envelope or a non-envelope type. The type value tells the print engine which fields it needs to look at in the record. These records correspond to the print on options displayed on the print postage dialog screen in the client software.

An exemplary embodiment of the present invention prints on envelopes in accordance with, byway of example, the DMM regulations (e.g., FIM size, placement, the maximum size of the return address, etc.). However, for labels, the system preferably prints in accordance with the label-specific fields in the forms database, for example the fields that define the location for the indicium, return address, and the delivery addresses. The forms database allows each media type stored in the database to be individually enabled or disabled. The system may enable a media type when the media type is first created.

A paper height variable may be used to identify the size of the print media. The paper height variable includes the height of the media in standard units such as for example "mils" (1/1000th of an inch increments). Paper height is measured based on the entire length of the media from top to bottom. The paper height variable preferably includes non-printable borders on label sheets orother print media.

Similarly, a paper width variable may be used to identify the width of the print media. Again, an exemplary paper width variable includes the entire width of the media from left to right. Also, the forms database preferably includes a paper source variable to assist the operating system to interpret the size of the print media. This field may be for example the standard Windows® code for a paper size.

In addition, the system may assign a name to custom paper sources, such as for example a custom label supported by a label printer driver. The client based printer database may includes printer groups which group drivers that support a media group. The group drivers may contain the names of the printer drivers that support specific print media. A variable may be included for each driver in a group documenting whether the printer driver supports envelope printing.

An exemplary embodiment of the present invention utilizes the printer set-up information to perform a margin requirements test to determine whether the printer in use can print postal indicia in accordance with USPS regulations 79. If the default envelope margin size for the printer in use satisfy the margin requirements the envelope is printed 81. If the default envelope margins do not satisfy the margin requirements an exemplary embodiment of present invention utilizes a virtualized printing process to print postal indicia within the USPS guidelines for PC postage. The client software determines the optimal size 83, location, and orientation to map an image of an envelope onto a visualized sheet. An exemplary virtualization process preferably supports a plurality of virtual sheet sizes including for example 8 ½" x 11", B5 (182mm x 257mm), or 11" x 17". The size of the virtualized sheet maybe determined by the size of the envelope.

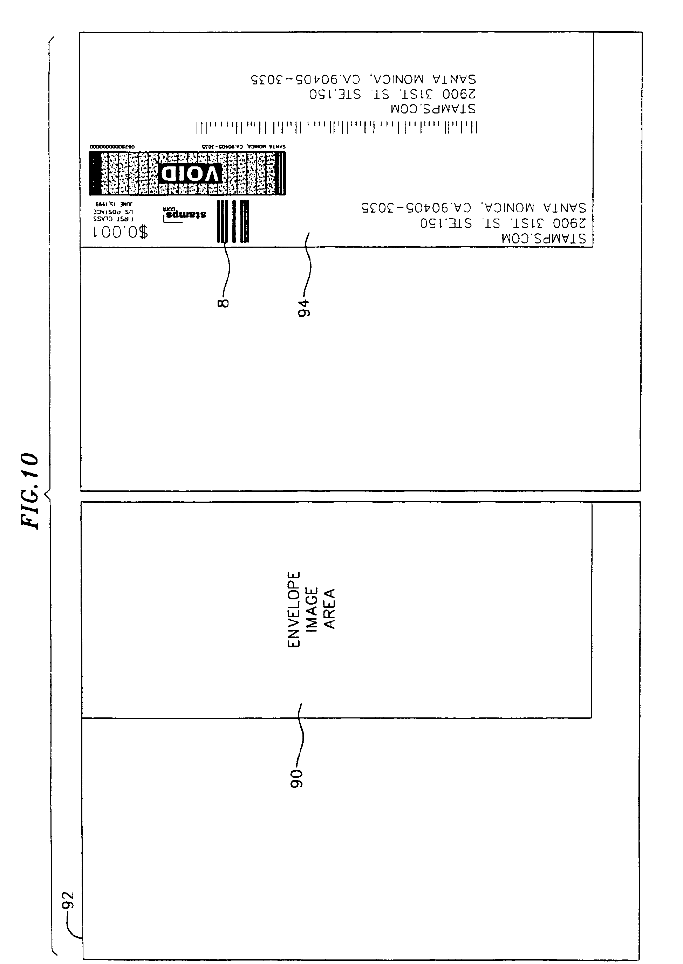

Referring to FIG. 10, an exemplary virtualization processes ensures that the envelope image is contained within a "envelope image area" 90 of the virtualized sheet 92. Thus, even though the user inserts an envelope 94 into the printer, the exemplary software preferably sends print commands to the printer for a virtualized sheet 92.

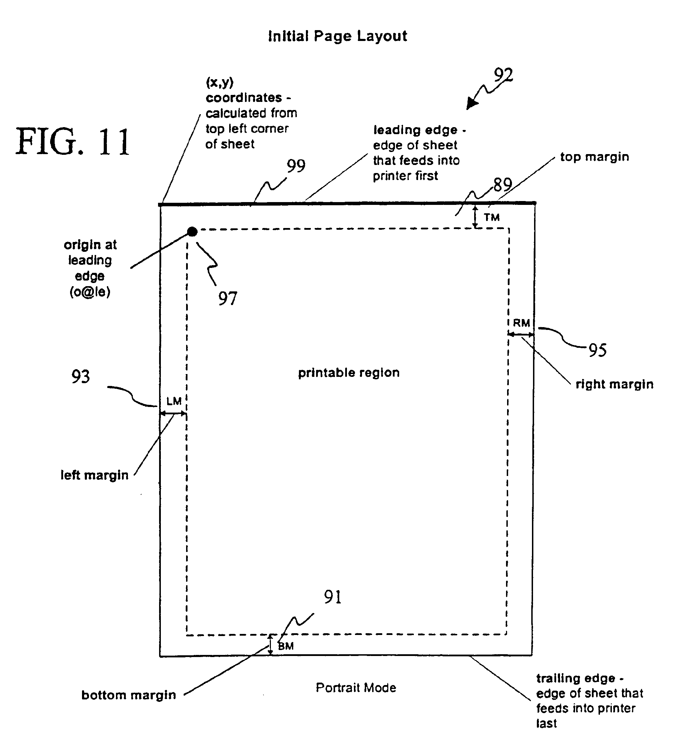

Referring to Fig. 11, the printable region (the area within the dashed lines) of a virtualized sheet 92 may be determined by four margins, namely the top margin 89, bottom margin 91, left margins 93 and the right margin 95. In addition, an exemplary system defines an origin point 97 for the virtualized sheet 92. The origin point 97 is preferably used to calculate the location of the image within the printable region. In portrait mode the edge of the paper that feeds into the printer first is known as the leading edge 91. In portrait mode the system preferably places the origin point 97 at the left corner of the leading edge of the virtual sheet. If the print job is rotated into landscape mode, the system moves the origin to the opposite edge of the sheet, known as the trailing edge.

Printer virtualization preferably orients the FIM barcode near the middle of the virtualized sheet thereby alleviating any physical margin constraints that might otherwise prevent a printer from printing the FIM barcode within 0.125" from the top of the envelope. In fact, the use of print commands for a virtualized sheet may allow the FIM barcode to be printed up to the edge of the envelope.

Printer offset or shift code is a variable dependent upon how an envelope is fed into a printer. Referring back to FIG. 9, the client software uses the printer offset to locate the envelope image with in the printable region of the virtualized sheet 85. Envelopes are fed into printers by means of feed trays. Feed trays typically have guides that align the print media to prevent it from skewing. However, the location of the feed tray and the way in which the envelopes are loaded may vary from printer to printer. Therefore, the printer offset variable may also vary from printer to printer.

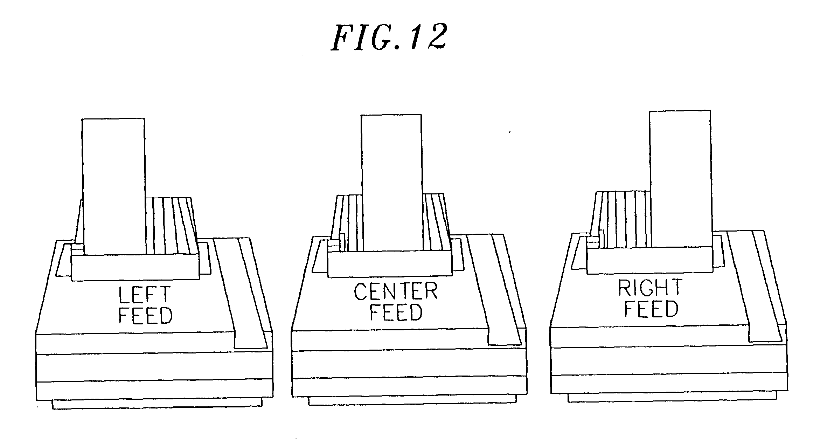

For example, referring to FIG. 12 the paper guides may load the envelope from the left, right, or center of the feed tray. In addition, the feed trays can be physically located in various places on the printer, for example on the top, front, back, or sides of the printer. The different locations of the feed trays make it difficult to classify printers (that don't feed from the center) as left or right. Therefore, an exemplary embodiment of the present invention classifies printer offset in terms of top and bottom offsets rather than left and right.

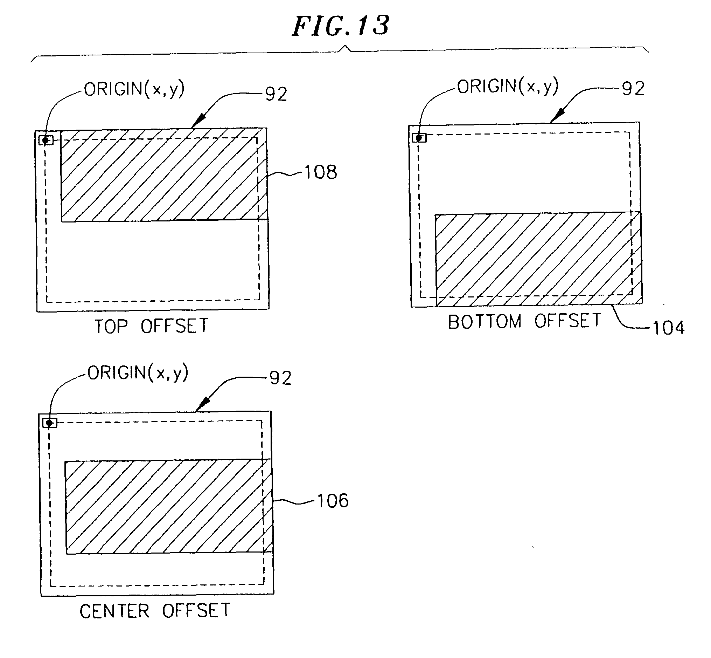

In an exemplary embodiment of the present invention the origin or reference point for the virtualized sheet is used to calculate the location of the envelope image. Referring to FIG. 13, printer offset may then be defined in terms of the vertical relationship between the envelope image and the origin of the virtualized sheet. If the set-up information on the print driver of the user's printer was not in the dynamic printer database, an exemplary embodiment of the present invention utilizes a wizard program to initially determine printer offset. The wizard program preferably generates one or more test shapes that are printed on a test envelope by the user's printer. Printer offset may then be defined by determining which of these shapes actually gets printed onto an envelope, (i.e., whether it is a top 108, bottom 104, or center 106 offset).

Once an offset is determined for a given printer the offset is preferably stored in the dynamic printer database so that future users who have the same printer may not have to exercise the wizard program to determine the printer offset. Rather, future users preferably obtain the offset information from the dynamic printer database. Once the system determines the offset, the envelope image may be located within the printable region of the virtualized sheet.

Portrait mode is the default orientation of a normal print job. However, since envelopes are typically printed in landscape mode the system software preferably modifies the printer setting from "portrait" to "landscape" mode. Printers handle the landscape mode in different manners. Some printers rotate the portrait image 90° to create a landscape image while others rotate the portrait image by 270°. Therefore, the ultimate location and orientation of the envelope image within the printable region of the virtualized sheet depends on the rotation undertaken by the printer to achieve landscape mode.

Referring back to FIG. 9, when the envelope image is properly located in the printable region of the virtualized sheet in accordance with the printer offset, the client software again performs a margins requirements test to determine whether the printer in use can print postal indicia in accordance with USPS regulations 86. If the margins for the virtualized sheet satisfy the margin requirements the client software uses rendering algorithms 87 to relocate the origin of the virtualized sheet to print the postal indicia onto the envelope 81.

As part of the rendering process, an exemplary embodiment of the present invention may incorporate a logo of the postal service provider in the postal indicia. Rather than integrating a single, static logo, the print engine preferably accommodates a scalable logo 84. In order to conform to the FIM placement standards which require that the FIM consistently be printed 2" +/- 1/8" from the right-hand edge of the envelope, the space available between the FIM and the human-readable portion of the indicium changes depending upon the right-had margin of the printer.

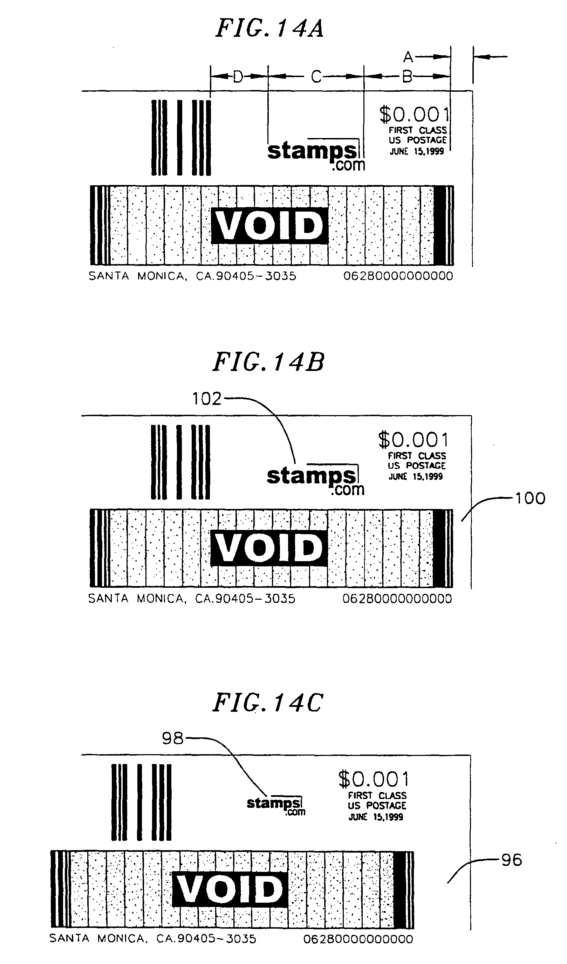

Referring to FIG. 14A the area between the right edge of the FIM barcode and the right hand edge of the envelope can be divided into a plurality of distinct sections, described as follows:

- "A" is the distance from the edge of the indicium to the edge of the paper. In many cases, this distance is determined by the physical margin of the printer, and is therefore a variable amount.
- "B" is the width of the human readable portion of the indicium. This width is preferably fixed.
- "C" is the width of a logo graphic. This width may be variable.
- "D" is the width of a FIM clear zone. Its width should also be fixed.

To satisfy the requirements promulgated by the USPS the distinct sections involved in locating the FIM barcode from the right hand edge of the envelope may be constrained as follows:

$$1.875" < A + B + C + D < 2.125" \tag{1}$$

Since B, the width of the human readable portion, and D the width of a FIM clear zone are preferably fixed, the system preferably reduces the size of C (the logo) when A (the printer margin) increases, to satisfy the above equation. Similarly, when A (the printer margin) decreases, the system preferably increases the size of C (the logo) so as to increase the branding within the indicium, A right hand margin (A) of about 7/10" or less allows the client software to print a logo (C) in the postal indicium. Generally, for a particular printer, the logo size will be constant for all envelope jobs.

An exemplary embodiment of the present invention shifts the human readable portion in accordance with the printer margin and scales the logo in a manner that maximizes the size of the logo while preserving the validity of the equation above. Referring to FIG. 14B, when a large printer margin 96 is required, a small logo 98 is preferably printed. Similarly, when a small margin 100 is allowed, the human readable portion shifts towards the edge of the envelope and a larger logo 102 is preferably printed. The latter is generally preferable since it provides more prominent branding and is considered more aesthetically appealing to the user.

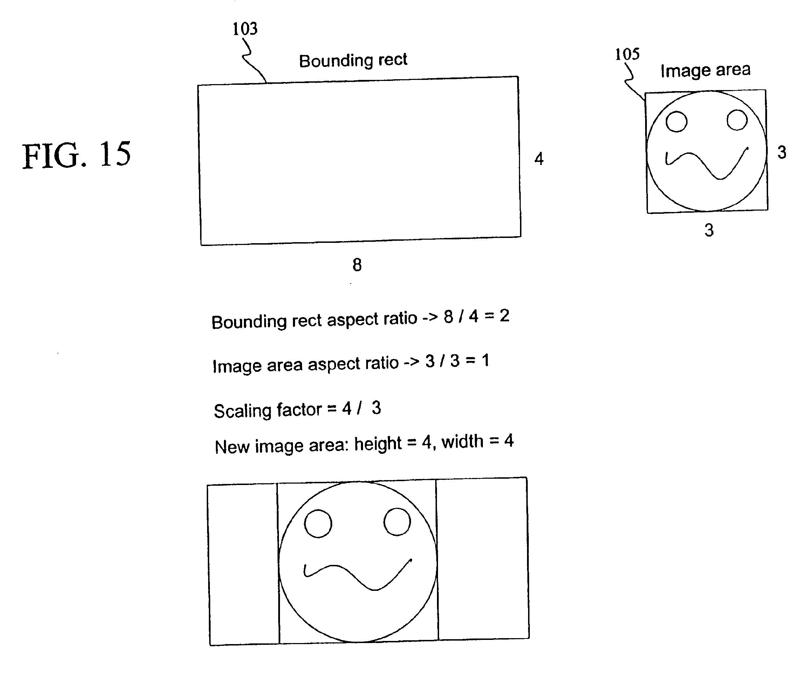

Referring to FIG. 15, an exemplary rendering algorithm for scaling the logo while maintaining the validity of Equation (1) above defines a printable bounding area 103 or a bounding rectangle and scales the logo to fit into the printable bounding area. Referring back to FIG. 14, the width of the printable bounding area is the distance between the human readable portion and FIM clear zone. The height of the printable bounding area is equal to the distance between the two dimensional bar code and the edge of the print media.

Referring back to FIG. 15, in operation the described exemplary rendering algorithm determines the aspect ratio (defined as the width/height) of the bounding area as well as the aspect ratio of an image area 107 that bounds the logo. If the aspect ratio of the bounding area is greater than the aspect ratio of the image area the rendering algorithm may scale the image to fill the printable bounding area. The rendering algorithm may create a vertical scale factor, defined as the height of the bounding area divided by the height of the image area, and scale the image vertically by multiplying the image height by the vertical scale factor. Further the rendering algorithm may create a horizontal scale, factor defined as the width of the bounding area divided by the width of the image area, and scale the image horizontally by multiplying the width of the image area by the horizontal scale factor.

An exemplary rendering algorithm for scaling the logo may best be demonstrated with an example. Therefore for purposes of illustration only, assume a printable bounding area has a width equal to eight and a height equal to four and therefore an, aspect ratio of two. Further assume an image area has a width of three and height of three and therefore an aspect ratio of one. In this instance the vertical and horizontal scale factors are equal to 4/3 so that the image area may be scaled horizontally, vertically or both with a scale factor of 4/3.

Referring back to FIG. 9, if the margins for the virtualized sheet do not satisfy the margin requirements an exemplary embodiment of the client software rotates the envelope image one hundred and eighty degrees 88. In these cases, the client software preferably queries the server based printer database to determine if the user's printer and print drivers are capable of error free rotation. The system preferably limits rotation to cases where the server based printer database certifies that the printer and print drivers support rotation without error.

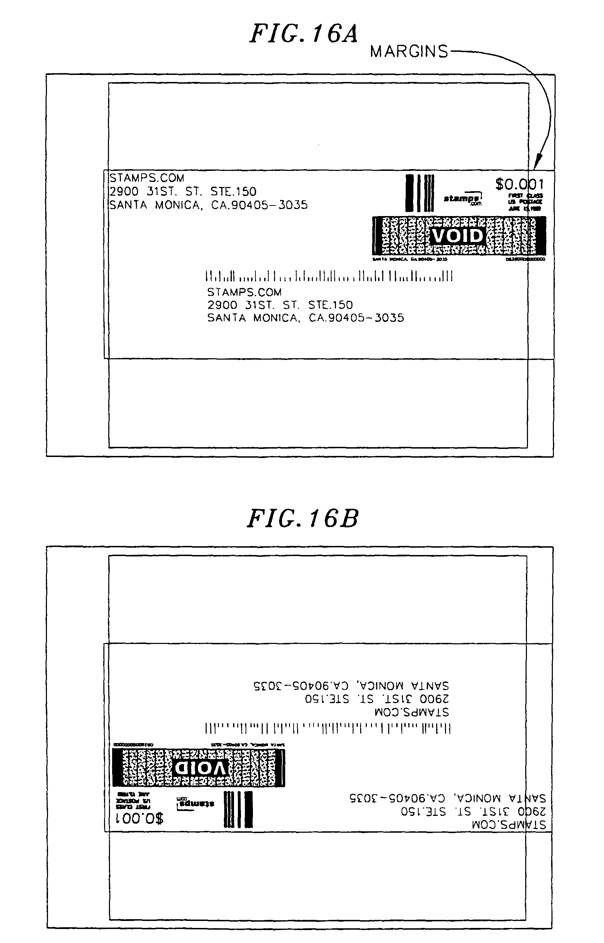

Referring to FIG. 16A, in operation the client software preferably checks the margin requirements (top margin less than or equal to 0.125" and right margin less than or equal to 0.70") to determine whether the image will properly print onto the envelope in accordance with USPS requirements. Referring to FIG. 16B, if the margins of the virtualized sheet do not satisfy the margin requirements the client software rotates the envelope image.

Referring back to FIG. 9 the client software tests the margin requirements again 86 after rotation. If the margins of the virtualized sheet, with the rotated image, fail to satisfy the margin requirements, the client software cannot print the envelope 89. If the margins of the virtualized sheet satisfy the margin requirements with rotation the client software renders the envelope image 87 and prints the envelope 81. Thus, the rotation process can help determine the ultimate orientation of the envelope image on the virtual sheet of paper.

To print postal indicia, the client software preferably uses a drawing surface to render an envelope image contained in a printable region of a virtualized sheet. The drawing surface may be used to calculate the location of each character to be printed. The drawing surface is preferably represented by a coordinate system having a logical origin. Each point on the coordinate space is represented by a set of coordinates, X and Y, (x,y). The (x,y) coordinates determine the precise location of the object to be drawn. Microsoft Windows supports four different coordinate spaces.

The attributes of a particular coordinate system are defined by the mapping mode. Page-space coordinates set the mapping mode. The mapping mode defines the unit of measure used to translate the page-space coordinates into the device-space coordinates used by a printer, and also defines the orientation of the device's x and y axes. For example, in HiEnglish mapping mode, each unit in the page-space coordinates is mapped to 0.001" in device-space coordinates and the value of X increases to the right and Y increases up from the bottom.

To support printing to a particular printing device, the client software preferably maps or copies the page area from one coordinate space to another. The client software initially renders the objects on a coordinate space called page space (sometimes referred to as logical space) using a modified Hi English mapping mode and translates the objects to the device coordinate space.

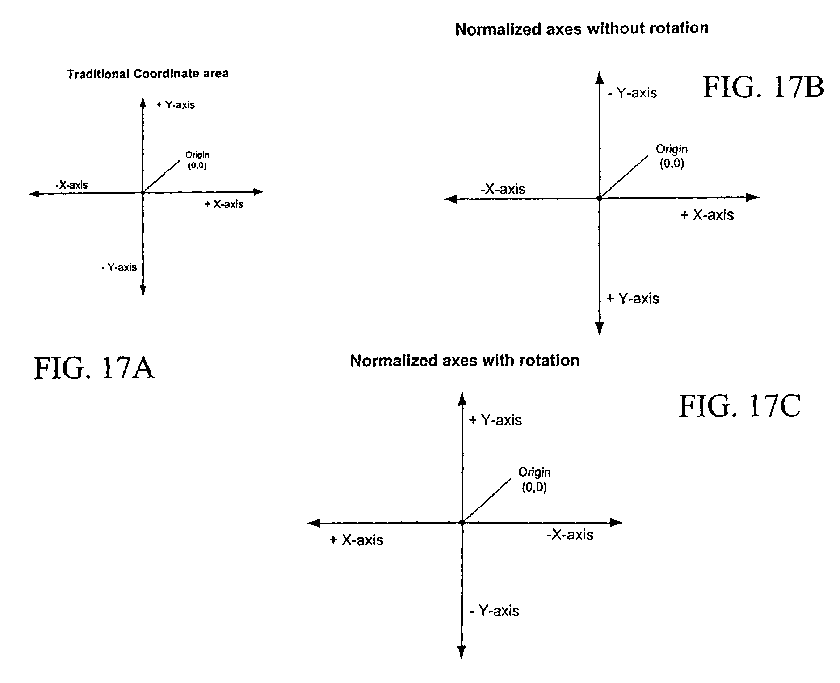

Referring to FIG. 17A, an exemplary embodiment of the present invention utilizes a standard x and y coordinate system. To standardize the coordinate area, an exemplary embodiment of the present invention preferably flips the x axis and y axis to support rotations that are necessary to print the image. The client software uses Windows mapping code that allows the axes to be flipped and creates a custom mapping code.

FIG. 17B shows the axes used by the client software for envelopes without rotation. The action of flipping forms a standard coordinate space with the positive x axis pointing to the right and the positive y axis pointing down. Similarly, FIG. 17C shows the custom axes used by the client software for envelopes with rotation.

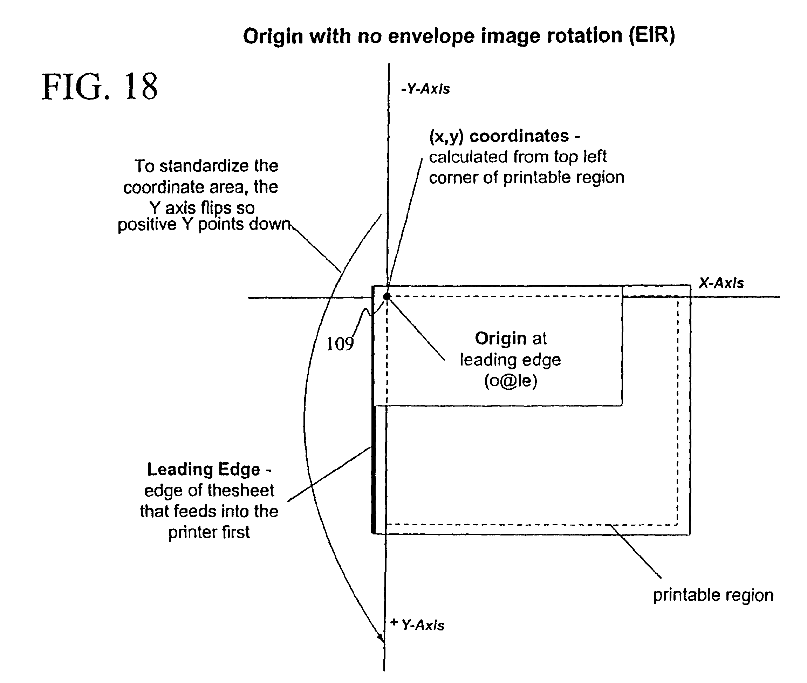

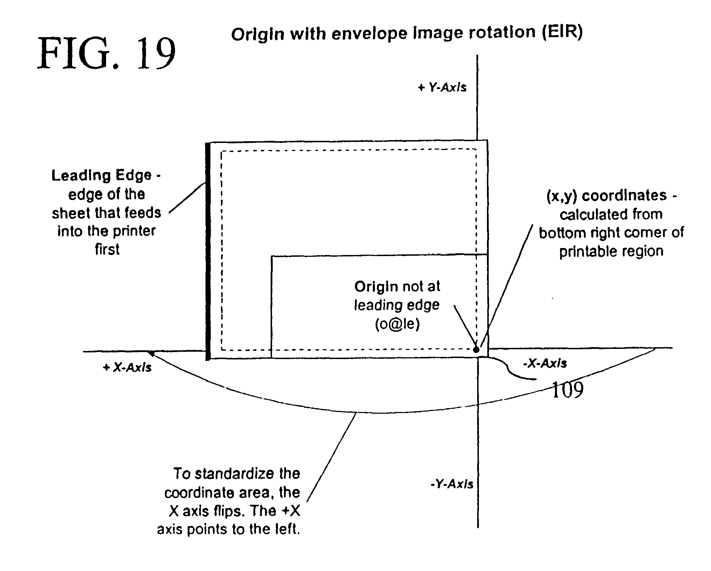

Referring to FIG. 18, the origin 109 of the virtualized sheet is preferably located at the top left-hand corner of the printable region of the virtualized sheet (the envelope.) The x and y coordinates may then be calculated from the origin. For example, if the positive X axis points to the right and the value of X is five, an exemplary drawing routine translates to the right side of the origin five units. Alternatively, if the positive X axis points to the left side and the value of X is five, the system drawing routine translates to the left side of the origin five units. Referring to FIG. 19, when the envelope image is rotated, the client software flips the X-axis so the positive X-axis points to the left direction and the positive Y-axis points upward.

If the origin is not at the top-left corner of the envelope, the client software translates the origin of the virtual sheet to the top-left corner of the envelope. For top, center or bottom offset printers the origin of the virtualized sheet preferably translates in the positive X direction a distance equal to the value of the paper-width minus envelope-width. Similarly, for center offset printers the origin preferably shifts in the positive y direction a distance equal to the value of (the paper-height minus envelope-height) divided by two. For bottom offset printers the origin preferably shifts in the positive y direction a distance equal to the value of the paper-height minus envelope-height.

In addition, the server based printer database may contain shift overrides. An exemplary embodiment of the present system preferably queries the server based printer database to determine if shift overrides exist and if so applies those overrides. An exemplary system further determines whether the image should be rotated. If so the software preferably translates the origin diagonally across the envelope image. To shift the image, the x axis translates in the positive X direction a distance equal to the value of the (envelope-width minus the left margin width) minus the width of the right margin. In addition, the y axis translates in the positive y direction a distance equal to envelope height minus the height of the top margin. The rendering process translates the logical coordinates of the image to device coordinates of the printer to correctly locate and print the indicia on the mailpiece.

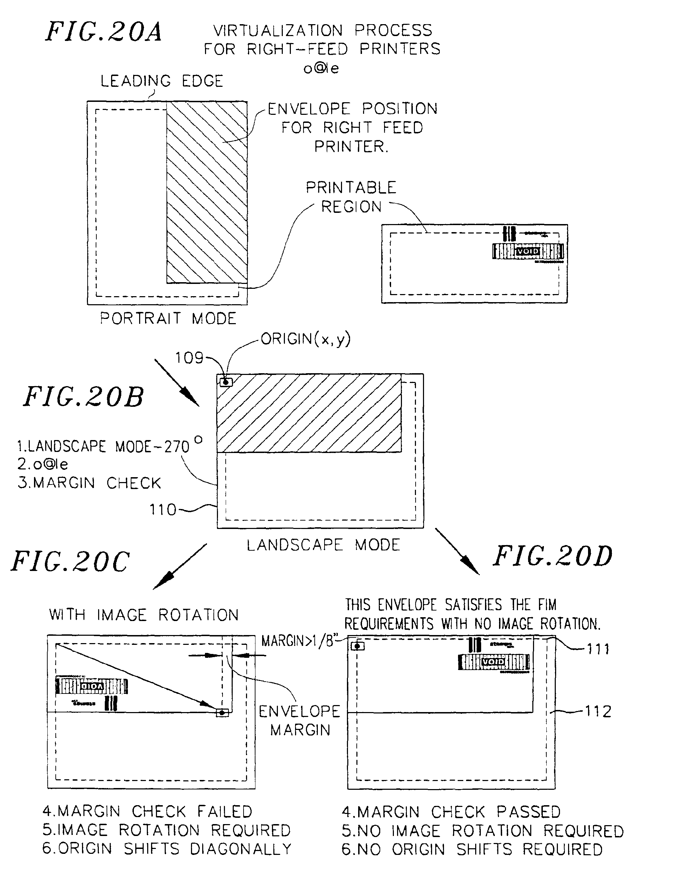

The operation of an exemplary image printing process may be best demonstrated with a series of examples. FIG. 20A shows aright hand feed printer with a printable location in the portrait mode. As shown in FIG. 20B when the printer rotates 270° into landscape mode the origin 109 of the virtualized sheet is at the leading edge 110 of the virtualized sheet. An exemplary embodiment of the present invention performs a margin requirements test to determine if the printer top margin 111 (relative to the origin of the virtual sheet) is less than 0:125" (to support FIM printing to USPS requirements) and the right margin 112 is less than 0.70" (to allow a logo of the postal service provider to be included in the indicium). If the image satisfies the margin requirements the postal indicia prints correctly onto the envelope as shown in FIG. 18D.

However, referring to FIG. 20C, if the image does not meet the margin requirements, the client software rotates the image 180°, and tests the margins again. To perform the margin requirements test with a rotated the image, the client software substitutes the bottom margin for the top margin and the left margin for the right margin. Thus the bottom margin should now be less than 0.125" and the left margin should now be less than 0.70". If the rotated image satisfies the margin requirements the client software may use rendering algorithms to relocate the origin and print the image correctly.

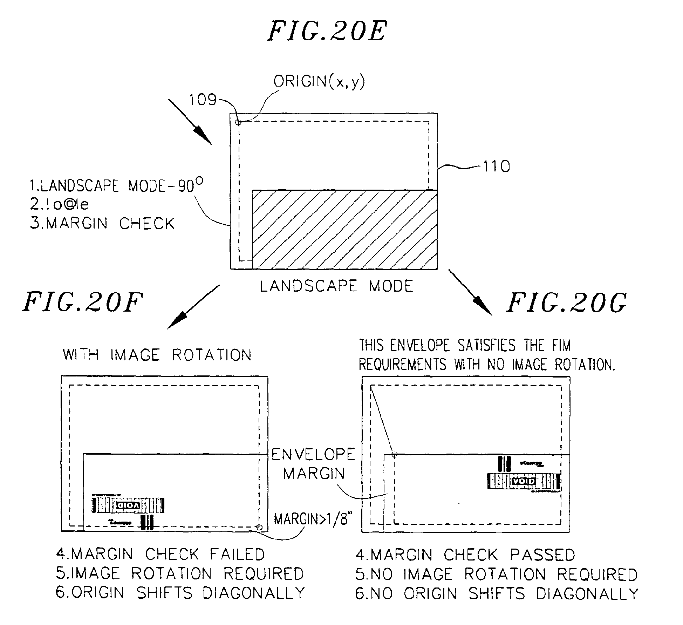

Referring to FIG. 20E when a right hand feed printer rotates 90° into landscape mode the origin 109 of the virtualized sheet is not located at the leading edge 110 of the virtualized sheet. An exemplary embodiment of the present invention performs a margin requirements test to determine if the envelope image satisfies the predetermined margin requirements, (i.e. printer top margin is less than 0.125" and the right margin is less than 0.70"). If the image passes the margin requirements test the postal indicia prints correctly onto the envelope as shown in FIG. 20G.

However, referring to FIG. 20F, if the envelope does not meet the margin requirements test, the postal indicia, including FIM barcode may be located outside the printable region of the virtualized sheet and the envelope may fail the USPS requirements for FIM barcode placement. The client software therefore, rotates the image 180°, and performs the margin requirements test again. If the image satisfies the margin requirements the client software uses rendering algorithms to print the postal indicia onto the envelope. In this instance the origin is preferably shifted across and down the page so that the image may be correctly printed.

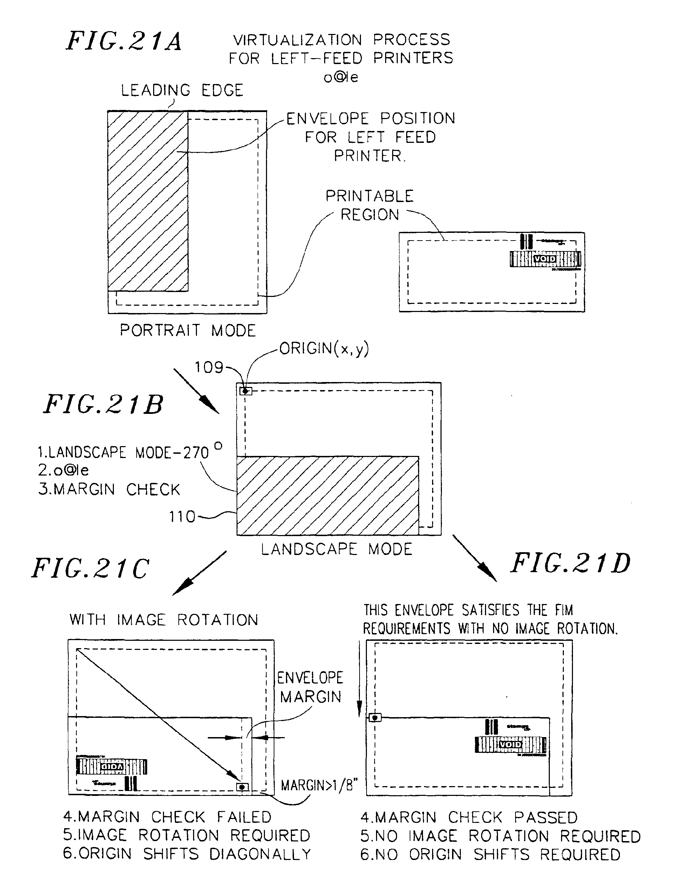

Similarly, FIG. 21A shows a left hand feed printer with a printable location in the portrait mode. As shown in FIG. 21B when the printer rotates 270° into landscape mode the origin 109 of the virtualized sheet is located at the leading edge 110 of the virtualized sheet. An exemplary embodiment of the present invention performs a margin requirements test to determine if the envelope image satisfies the predetermined margin requirements, (i.e. printer top margin is less than 0.125" and the right margin is less than 0.70"). If the image satisfies the margin requirements the postal indicia prints correctly onto the envelope without image rotation as shown in FIG. 21D. The client software may therefore use rendering algorithms to relocate the origin and print the envelope.

However, referring to FIG. 21C, if the image does not meet the margin requirements, the client software rotates the image 180°, and performs the margin requirements test again. If the image satisfies the margin requirements, the client software may use rendering algorithms to relocate the origin and print the image correctly.

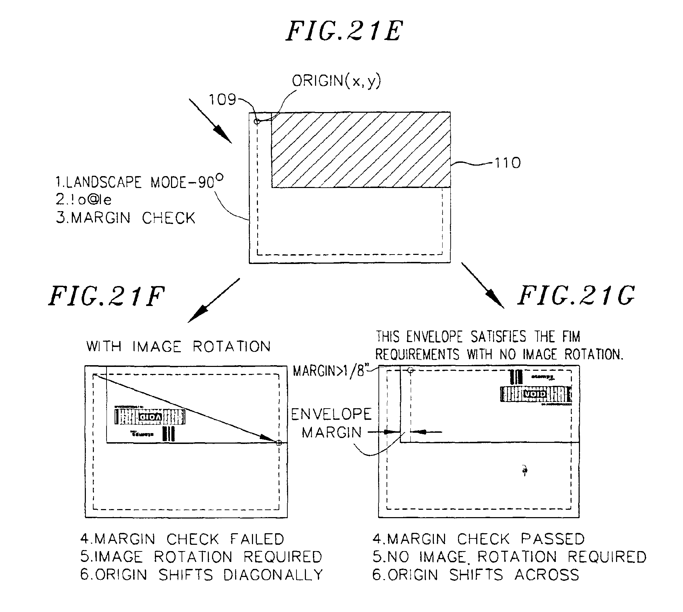

Referring to FIG. 21E when a left hand feed printer rotates 90° into landscape mode the origin 109 of the virtualized sheet is not located at the leading edge 110 of the virtualized sheet. An exemplary embodiment of the present invention performs a margin requirements test to determine if the envelope image satisfies the predetermined margin requirements, (i.e. printer top margin is less than 0.125" and the right margin is less than 0.70"). If the image passes the margin requirements test the postal indicia prints correctly onto the envelope without rotation as shown in FIG. 21G. The client software uses rendering algorithms to shift the origin and print the postal indicia onto the envelope.

However, referring to FIG. 21 F, if the envelope image does not meet the margin requirements, the postal indicia, including FIM barcode may be located outside the printable region of the virtualized sheet and the envelope may fail the USPS requirements for FIM barcode placement. The client software therefore, rotates the image 180°, and performs the margin requirements test again. If the image satisfies the margin requirements the client software uses rendering algorithms to print the postal indicia onto the envelope. In this instance the origin is preferably shifted across and down the page so that the image may be correctly printed.

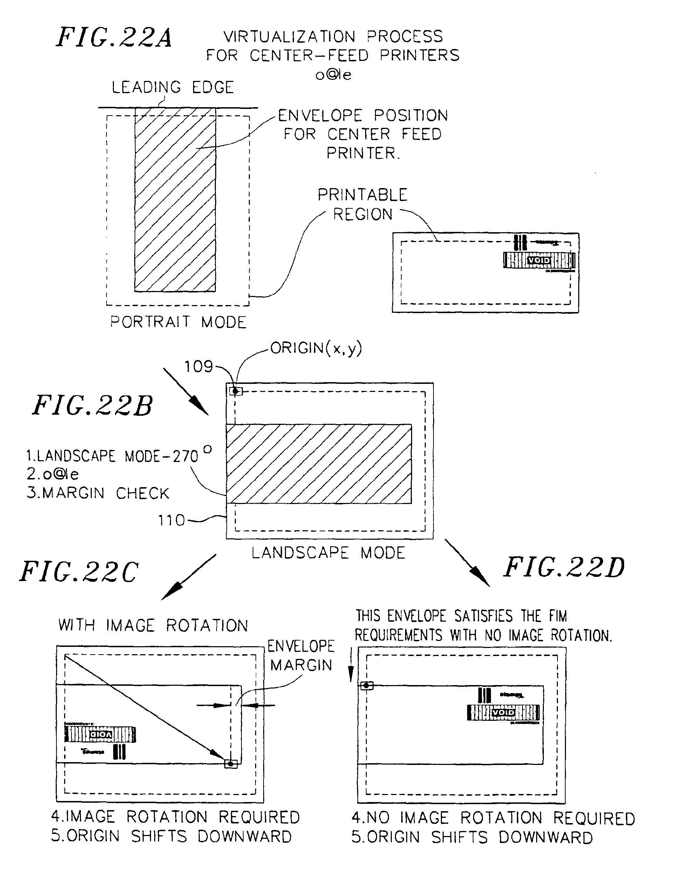

As a further example, FIG. 22A shows a center feed printer with a printable location in the portrait mode. Referring to FIG. 22B, when the printer rotates 270° into landscape mode the origin 109 of the virtualized sheet is at the leading edge 110 of the virtualized sheet. An exemplary embodiment of the present invention performs a margin requirements test to determine if the envelope image satisfies the predetermined margin requirements, (i.e. printer top margin is less than 0.125" and the right margin is less than 0.70"). If the image passes the margin requirements test the postal indicia prints correctly onto the envelope without image rotation as shown in FIG. 22D. The client software may therefore use rendering algorithms to relocate the origin and print the envelope.

However, referring to FIG. 22C, if the image does not meet the margin requirements, the client software rotates the image 180°, and performs the margin requirements test again. If the image satisfies the margin requirements, the client software may use rendering algorithms to relocate the origin and print the image correctly.

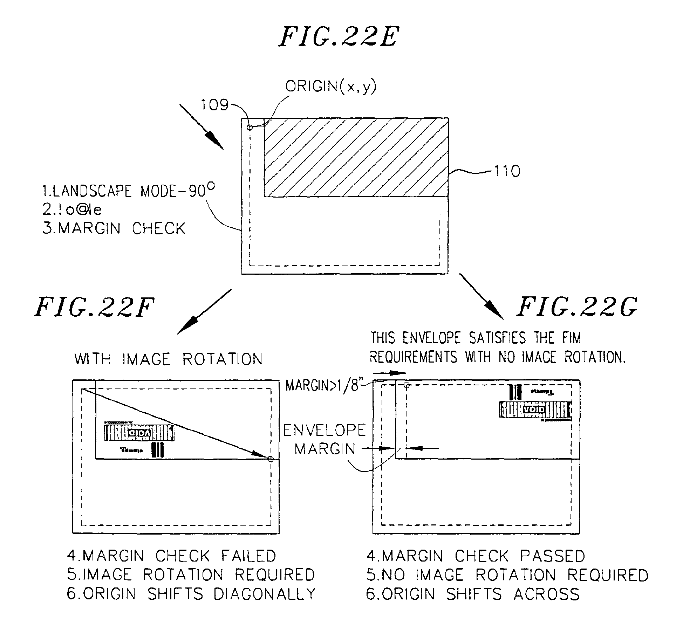

Referring to FIG. 22E when a center fed printer rotates 90° into landscape mode the origin 109 of the virtualized sheet is not located at the leading edge 110 of the virtualized sheet. An exemplary embodiment of the present invention performs a margin requirements test to determine if the envelope image satisfies the predetermined margin requirements, (i.e. printer top margin is less than 0.125" and the right margin is less than 0.70"). If the image passes the margin requirements test the postal indicia prints correctly onto the envelope without rotation as shown in FIG. 22G. client software uses rendering algorithms to shift the origin down and across and print the postal indicia onto the envelope.

However, referring to FIG. 22F, if the envelope does not meet the margin requirements, the postal indicia, including FIM barcode may be located outside the printable region of the virtualized sheet and the envelope may fail the USPS requirements for FIM barcode placement. The client software therefore, rotates the image 180°, and performs the margin requirements test again. If the image satisfies the margin requirements the client software uses rendering algorithms to print the postal indicia onto the envelope. In this instance the origin is preferably shifted across and down the page so that the image may be correctly printed. Thus, the rotation process can help determine the ultimate orientation of the envelope image on the virtual sheet of paper.

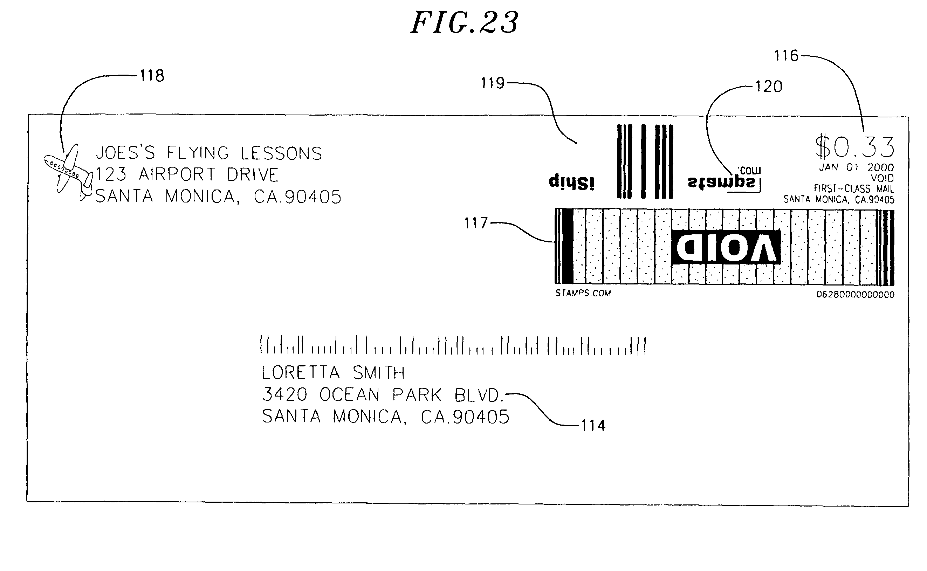

In the described exemplary embodiment the client software flips the X-axis so the positive X-axis points to the left when the envelope image is rotated. Certain printers may not be able to support flipping the X-axis. As a result, these printers may print the postal indicia with the graphic portion inverted or without the graphic altogether (see FIG. 23). Therefore, an exemplary embodiment of the client software preferably includes a two pass graphic rendering routine that allows the client software to separately render the textual and graphic components of the mailpiece.

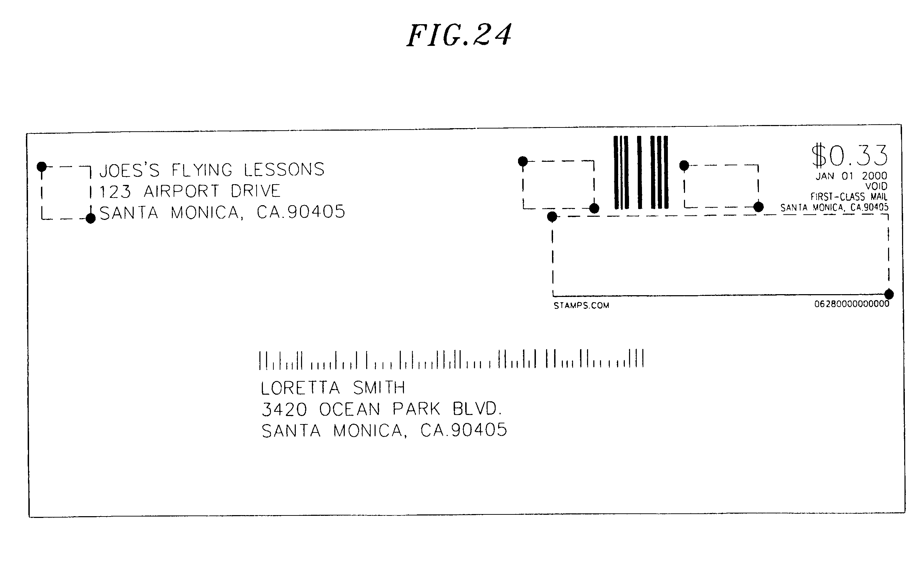

In operation, the client software performs a first set of adjustments to the drawing surface and renders the textual components, including the delivery address 114, the return address 115 and the indicium 116 of the mailpiece. The client software preferably stores the image information for the graphic components as well as the corner coordinate points of the location where the image of the graphic components are to be printed (see FIG. 24).

The graphic components include the 2-d Bar code 117, the return address graphic 118, the indicium graphic 119 and the service provider logo 120. Once the textual information is rendered, the client software preferably adjusts the drawing surface a second time. In the described exemplary embodiment, the client software resets the mapping mode to MM_TEXT, each logical pixel maps to a physical device pixel, the positive X axis points to the right, and the positive Y axis points downward. The client software traverses the list of saved images of the graphic components, rendering them for printing using the new coordinates.

However, the axes have been flipped in the opposite direction from the standard rotated mode. Therefore, the client software preferably rotates the images of the graphic components 180°. In an exemplary embodiment of the client software, the images of the graphic components are rotated in memory using standard image processing techniques. Upon completion of printing the client software refreshes the drawing surface to its original state before any adjustments were made.

An exemplary embodiment includes various print setup wizards, such as for example, print, verification, print QA envelope and determine top, center or bottom envelope feed. The print setup wizards are preferably stored in a printer setup portion of a getting started wizard that a user may execute before utilizing the software.

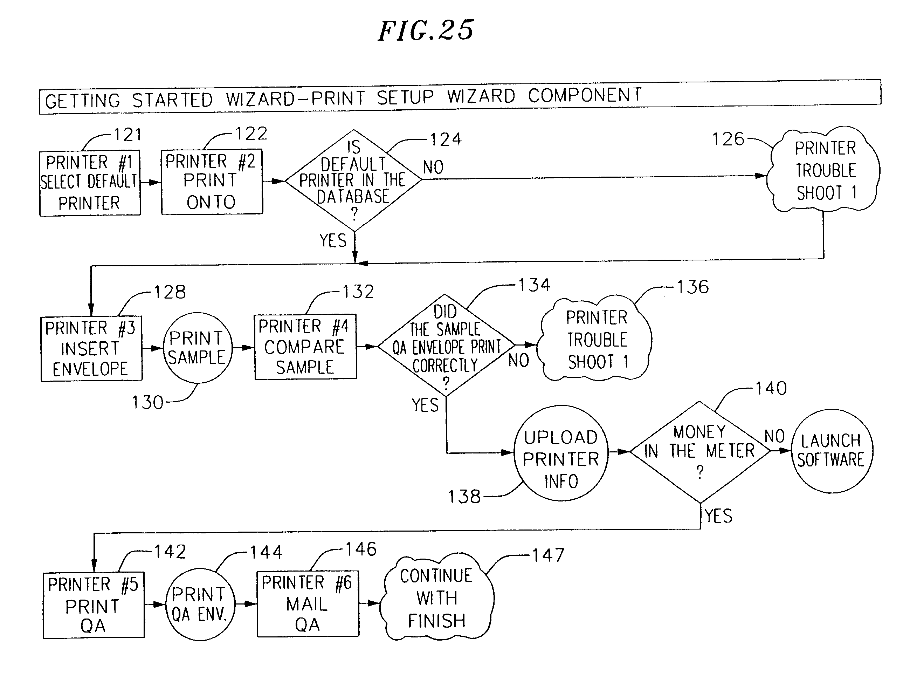

An exemplary logical flow diagram of the printer setup component is shown in FIG. **25 .** An initial default printer selection screen 121 allows the user to select a default printer. A print onto screen 122 then prompts the user to select an envelope size to be used for printer setup testing. Next the system may determine 124 whether the default printer selected by the user is stored in the server based printer database. If the default printer is not included in the database the system defaults to a printer trouble shoot wizard 126 to determine the feed offset for the selected default printer.

If the default printer is included in the database an insert envelope screen 128 preferably prompts the user to insert an envelope into the printer to complete further setup testing. The system then prints a test sample 130 onto the envelope inserted into the printer. A compare sample screen 132 preferably then prompts the user to compare 134 the printed postage sample with a representative envelope displayed on the screen. If the postage sample printed on the envelope does not match the postage on the displayed envelope the system may again default to a printer trouble shoot wizard 136 to determine the feed offset for the selected default printer. If the printed sample matches the displayed postage the system may upload 138 print parameters for the selected default printer into the server based print database.

The USPS requires users of computer-based postage processing systems to mail in an actual postage sample printed on what is known as a quality assurance (QA) envelope. The USPS utilizes the QA envelope to confirm that the printed postage complies with the promulgated USPS standards. Since the QA envelope must include valid postage the system preferably determines whether the user's account balance 140 is sufficient to cover the postage. If the account balance is sufficient a print QA envelope screen 142 may inform the user as to the requirements for a QA envelope and prompts the user to insert an envelope into the printer. The system may then print 144 a valid postal indicum onto the inserted envelope. A mail QA envelope screen 146 may then prompt the user to forward the QA envelope to the USPS. A finish screen 147 may then inform the user that the set-up wizard has been successfully completed.

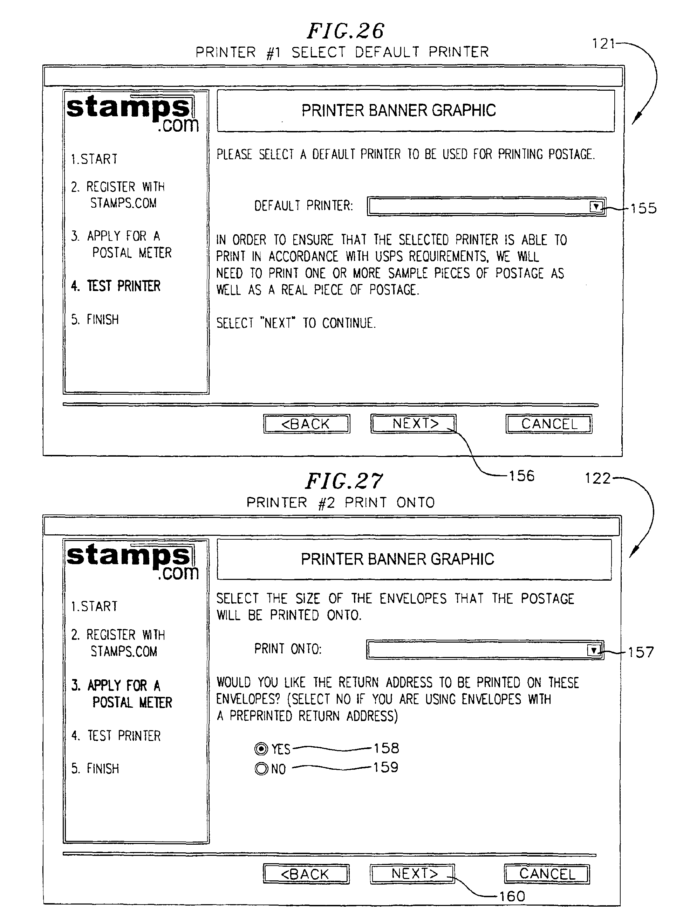

FIG. 26 shows an exemplary select default printer screen 121. The select default printer screen 121 may inform the user that sample patterns need to be printed to verify compliance with USPS requirements. A drop down box 155 may display the printers that are installed on the user's system, and allow the user to select a default printer. The default printer selection is preferably incorporated into the standard print prepare dialog box, and therefore remains the default printer until the user selects otherwise. In the described exemplary embodiment, a "Next>" button 156 is not available until the user selects a default printer.

Referring to FIG. 27, an exemplary print onto screen 122 may allow the user to select information needed to support the print test functions. For example, a drop down box 157, may be used to allow users to select the size of the envelope to be used throughout the tests. The user may also be allowed to omit the return address. For example, the user may be allowed to select a "yes" button 158 with the mouse to print the return address or a "no," button 159 to prevent the return address from printing.

The user's selections may be stored and used for all testing undertaken within the print setup wizard. The information that is gathered here may also be used to populate the corresponding fields within the print postage and print options dialog boxes when the user first launches these screens. In an exemplary embodiment of the present invention, a "Next>" button 160 is not available until the user selects an envelope size and answers the yes/no question.

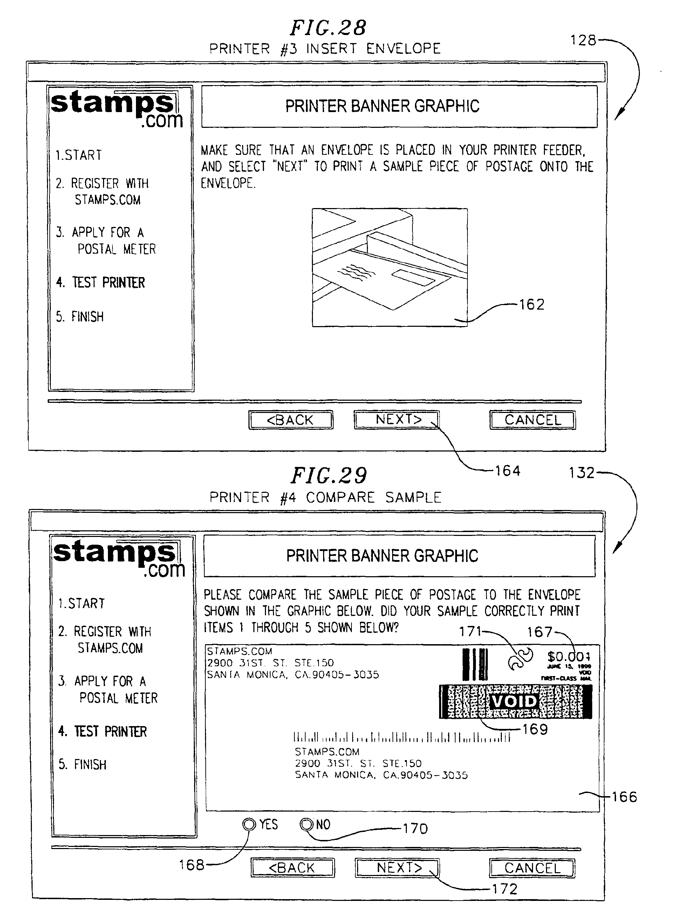

Referring to FIG. 28, an exemplary insert envelope screen 128 notifies the user that postage is about to be printed, and instructs the user to load an envelope into the feeder. A graphic 162 of an envelope being placed into a printer is preferably used to help re-enforce the action to the user. This screen maybe used multiple times during the printer setup portion of the getting started wizard. A "Next>"button 164 may be immediately available. When the "Next>" button is selected, a sample Quality Assurance (QA) envelope is preferably printed.

Referring to FIG. 29, an exemplary compare sample screen 132 prompts the user to compare the QA envelope with the envelope 166 displayed on the screen. The QA envelope preferably contains, FIM barcode, a human readable portion 167 and a two dimensional barcode portion 169. The human readable portion 167 may contain the postage value, mail class, the date and the meter number. In addition, a logo 171 and the destination zip code may be included. The two dimensional barcode 169 is intended to help thwart fraud, and may include information about the mail pi ece, such as for example, the destination ZIP code, the amount of postage applied, the date and time the postage was applied, and a digital signature so that the USPS can validate the authenticity of the postage. The user preferably verifies that each of the postal indicia features printed on the QA envelope match those displayed on the compare sample screen 132. In an exemplary embodiment of the present invention, neither a "yes" radio button 168 or a "no" radio button 170 is selected by default. A "Next>" button 172 is preferably not available until the user selects either the yes or no button.

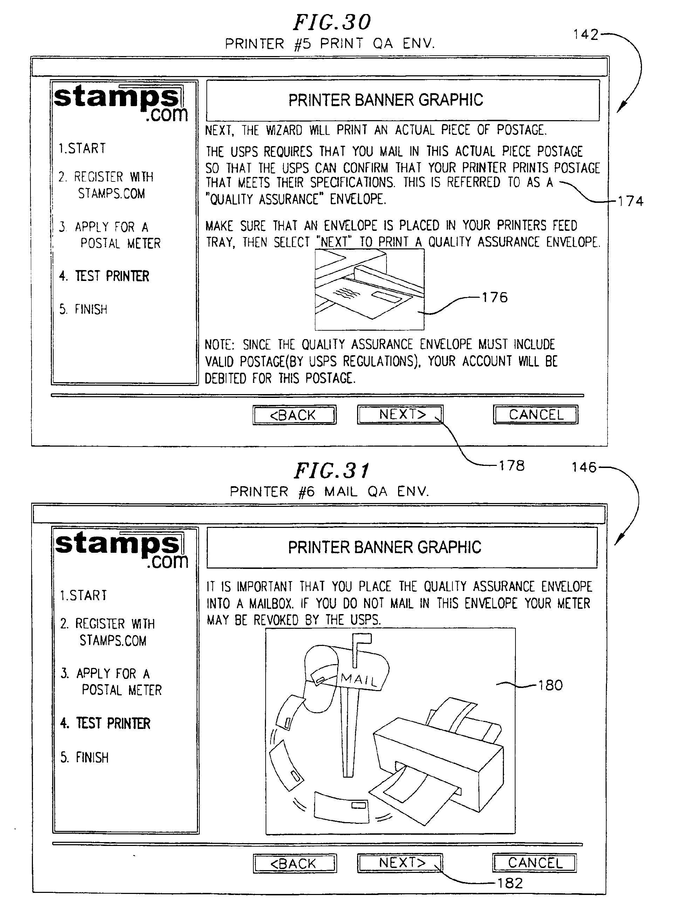

Referring to FIG. 30, an exemplary print QA screen 142 is similar to the insert envelope screen. The print QA screen 142 may educate 174 the user about the purpose of and requirements for QA envelopes. In addition the print QA screen 142 may instruct the user to load an envelope into the feeder because postage is about to be printed. A graphic 176 of an envelope being placed into a printer may be used to help re-enforce the action to the user. Further, the user may also be informed that the USPS requires QA envelopes to include valid postage and that the user's account will be debited for this postage. A "Next>" button 178 may be immediately available. When the "Next>" button 178 is selected, a QA enveloppe is printed.

Referring to FIG. 31, an exemplary mail QA envelope screen 146 preferably instructs the user to promptly mail the QA envelope or the user's meter license may be revoked. A graphic 180 of an envelope being placed into a mail box may be used to help re-enforce the action to the user. A "Next" button 182 may be immediately available.

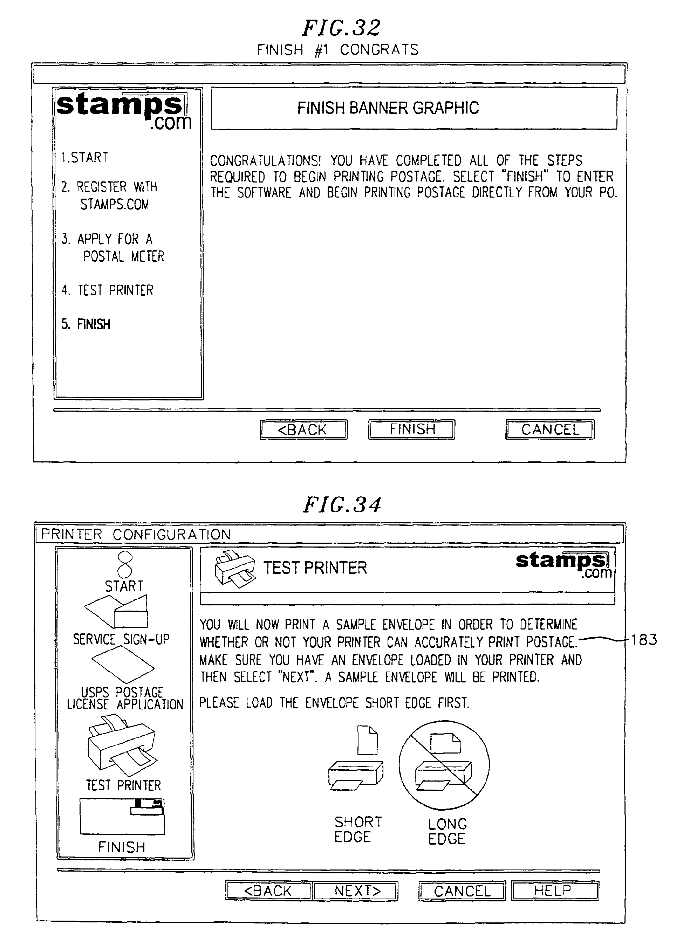

Referring to FIG. 32 an exemplary finish screen 147 may be used to congratulate the user for completing the set-up wizard, and to launch online postal service software. A "Finish" button may be available immediately. Once the "Finish" button has been selected, the client software is preferably launched.

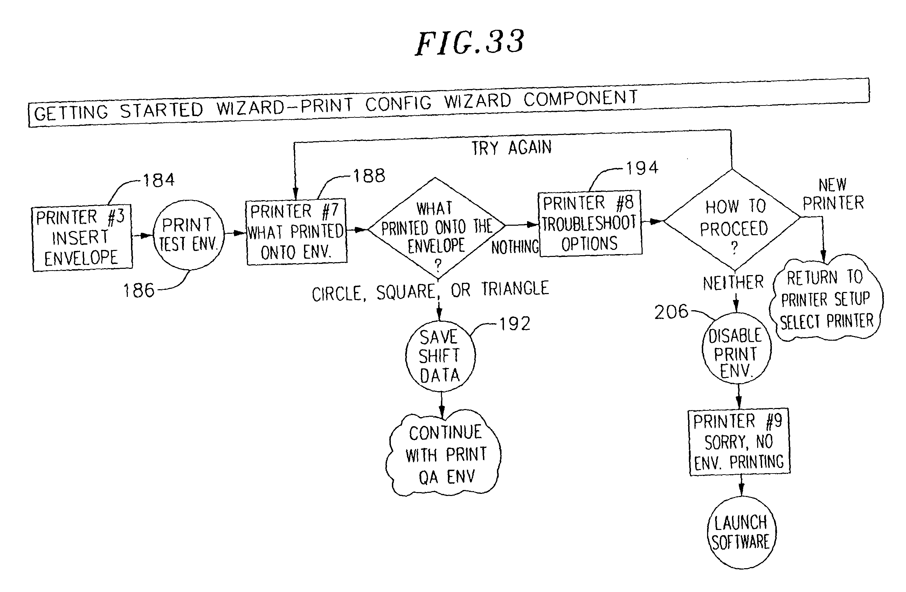

A print configuration wizard maybe initiated if print parameters for the default printer are not stored in the server based printer database, or if the sample QA envelope (see FIG. 25) does not match the displayed envelope. A logic flow diagram of an exemplary print configuration wizard is shown in FIG. 33. Referring to FZG. 34, a test printer screen preferably prompts the user to place an envelope in the printer feed tray. The test printer screen advises the user that a sample envelope needs to be printed to determine whether the user's printer can print postal indicia and instructs the user to insert the envelope short edge first 183. When the user selects "Next>", a test pattern including, for example, a circle, a square, and a triangle may be printed 186 (FIG. 33) on the envelope inserted into the printer.

One of ordinary skill in the art will appreciate that the test pattern is not limited to the described combination of shapes. Rather the test pattern may comprise, for example, any combination of shapes, symbols, letters or numbers. Alternatively, a single character may also be used, wherein the printer offset may be determined in accordance with how the single character prints on a test envelope. Therefore, the described test pattern is by way of example and not by way of limitation.

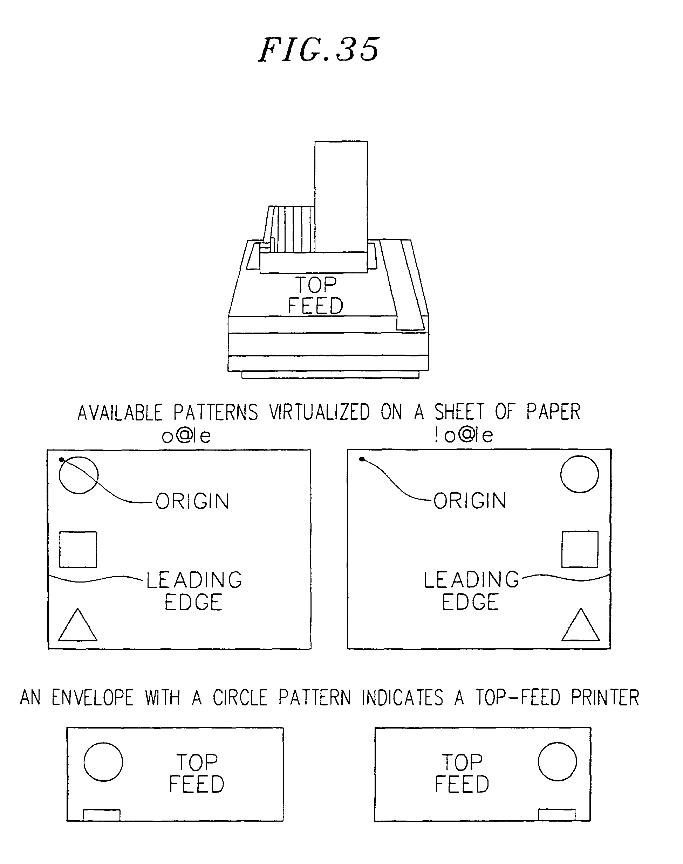

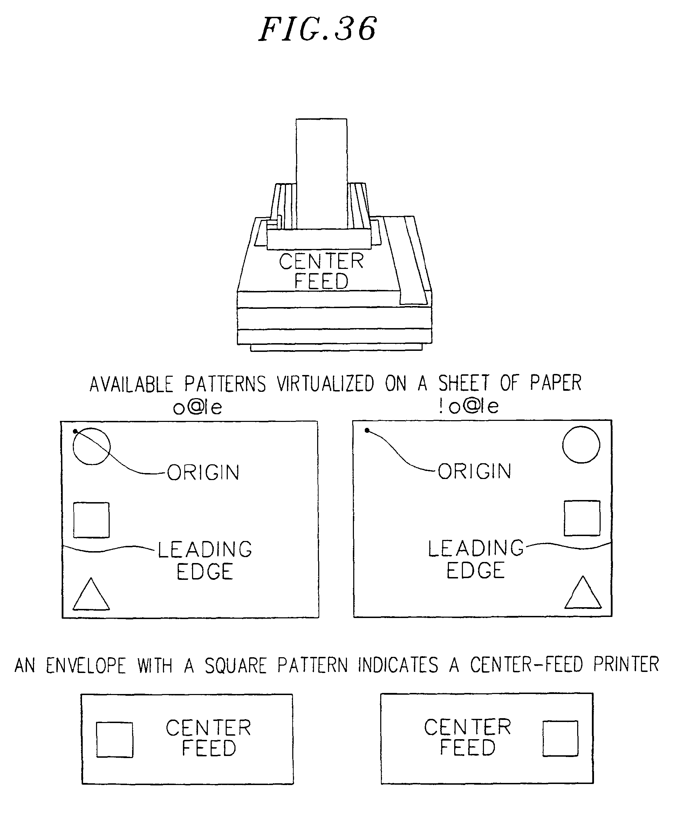

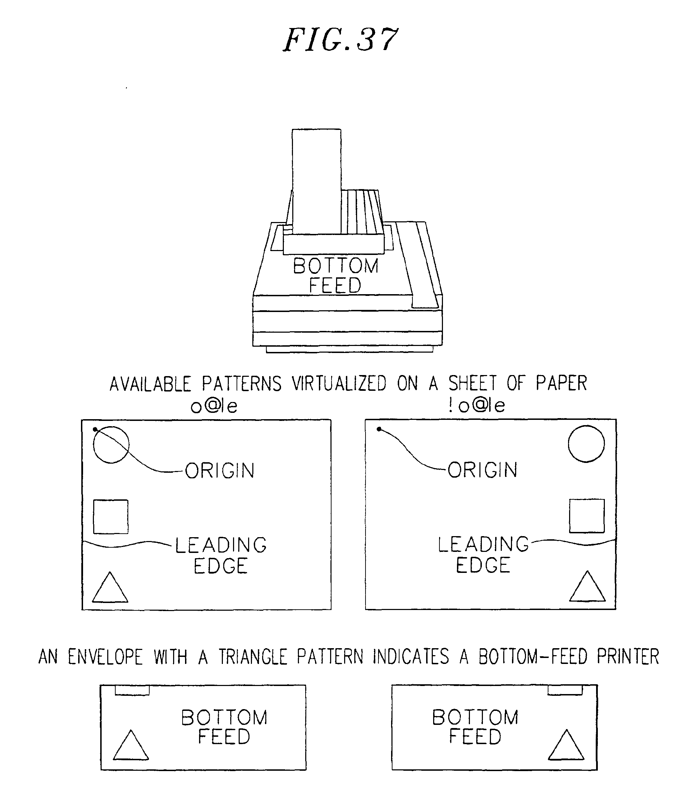

The client software preferably draws all three shapes on a virtualized sheet. In an exemplary embodiment, only one of the shapes completely prints onto the envelope in accordance with how an envelope is fed into the printer. For example, in an exemplary embodiment a top feed printer (see FIG. 35) results in a circle being printed onto a test envelope, wherein a square pattern indicates a center feed printer (see FIG. 36) and a triangle pattern indicates a bottom feed printer (see FIG. 37). The top, center or bottom designations are in reference to the location of the origin on the virtualized paper.

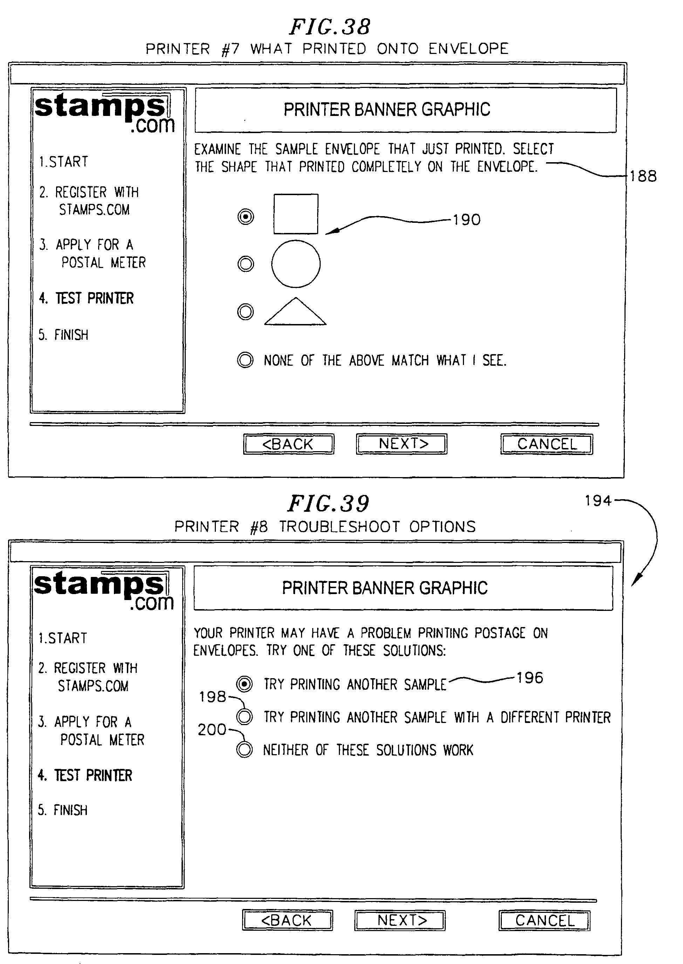

Referring to FIG. 38, the system preferably asks the user to select which shape printed on the envelope 188 by for example, selecting one of a series of buttons 190, each of which corresponds to one of the particular shapes in the test pattern. Based upon this result, the system may determine the appropriate offset. Referring back to FIG. 33, the offset information may be sent to the server 192, and the user preferably continues with the insert envelope screen 128 within the printer setup flow diagram shown in FIG. 25.

If the user selects "none of the above match what I see" on FIG. 38, a trouble shoot screen 194 may appear as shown in FIG. 39. The trouble shoot screen 194 preferably presents the user with a series of options and preferably prompts the user to select an option, by for example, selecting one of a series of buttons, each of which corresponds to a particular option. Possible options may include for example:

- Try printing another sample 196. If the user selects this options, a different test pattern is sent to the printer, so that the comparison process may be undertaken again.
- Try printing another sample to a different printer 198. Selecting this option links the user back to the select default printer screen 121 of the print setup logic flow diagram (see FIG. 25), thus allowing the user to select another printer and start the process again.
- Neither of these solutions work 200. Selecting this option indicates that the system cannot determine a feed offset and therefore cannot print envelopes using the user's printer.

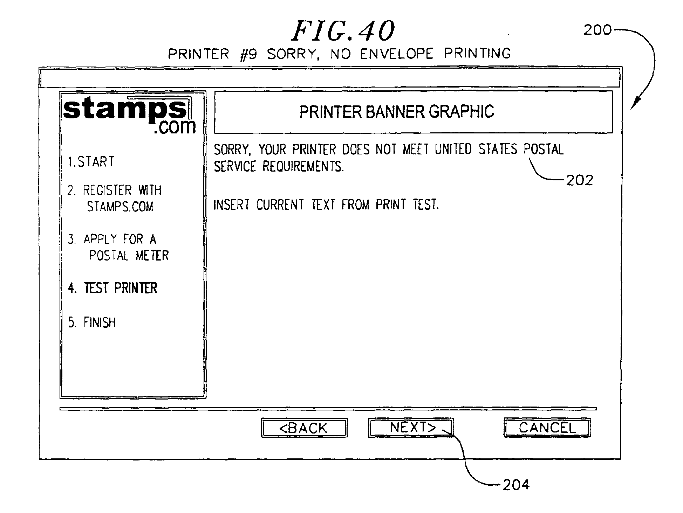

If the user selects "neither of these solutions work" from the plurality of options on FIG. 39, the system preferably informs the user that the current default printer does not support USPS requirements 202 and that the current printer is not able to print postage onto envelopes, only onto labels (see FIG. 40). A "Next>" button 204 may be immediately available. When the Next button 204 is selected, the client software preferably disables printing to envelopes 206 (see FIG. 33).

Although a preferred embodiment of the present invention has been described, it should not be construed to limit the scope of the appended claims. For example, the present invention may be implemented by a variety of computer based postage metering systems in accordance with a variety of print requirements promulgated by postal systems around the world. Further, although the operation of the present invention has been demonstrated in accordance with USPS requirements for PC based postal printing, the present invention is not limited to applications in accordance with the USPS requirements. Rather, the present invention is equally applicable for operation in all PC postal printing systems,

In addition, those skilled in the art will understand that various modifications may be made to the described embodiment. Moreover, to those skilled in the various arts, the invention itself herein will suggest solutions to other tasks and adaptations for other applications. It is therefore desired that the present embodiments be considered in all respects as illustrative and not restrictive, reference being made to the appended claims rather than the foregoing description to indicate the scope of the invention.

**Claims**

1.  A method of printing postal indicia (116, 119) onto a print media comprising:

    determining a printer offset as a function of how the print media is fed into a printer;
    generating a virtualized sheet in accordance with the size of the print media;
    mapping an image of said postal indicia (116, 119) onto the virtualized sheet (92);
    performing a margin requirement test on the mapped image; and
    generating a print job for the virtualized sheet (92) if the margin requirement test is satisfied, wherein the image of said postal indicia (116, 119) is located within a printable region of the virtualized sheet (92) as a function of said printer offset; and
    printing said postal indicia (116, 119).

2.  The method of claim 1 further comprising determining size of said virtualized sheet (92) as a function of size of the print media.

3.  The method of claim 1 wherein the step of determining said printer offset comprises sending a print job having one or more patterns to said printer and determining said printer offset as a function of how one or more of said patterns prints on a test print media.

4.  The method of claim 1 wherein the step of determining said printer offset comprises:

    selecting a printer, and
    determining the printer offset for the printer from a printer database having information on one or more printer drivers.

5.  The method of claim 1 wherein the step of determining said pointer offset comprises:

    selecting a printer; and
    determining the printer offset for the printer from a printer database having information on one or more printers.

6.  The method of claim 1 wherein the step of printing said postal indicia (116, 119) comprises printing a FIM (8).

7.  The method of claim 1 wherein the step of printing said postal indicia (116, 119) comprises printing a human readable portion (114, 115).

8.  The method of claim 1 wherein the step of printing said postal indicia (116, 119) comprises printing a two dimensional barcode portion (117).

9. The method of claim 1 further comprising encoding a digital signature into a two dimensional barcode (117), wherein the step of printing said postal indicia comprises printing said two dimensional bar code (117).

10. The method of claim 1 further comprising rotating the image of said postal indicia (116, 119) as a function of the printable region of said virtualized sheet (92).

11. The method of claim 10 further comprising translating an origin of said virtualized sheet and rendering the image of said postal indicia (116, 119) as a function of said translated origin.

12. The method of claim 10 further comprising:

performing a first set of adjustments to a drawing surface;
rendering a first component of said postal indicia (116, 119) in accordance with the first set of adjustments to said drawing surface;
storing location of a second component of said postal indicia (116, 119) in accordance with first set of adjustment to said drawing surface;
performing a second set of adjustments to the drawing surface; and
rendering said second component of said postal indicia (116, 119) in accordance with the second set of adjustments to the drawing surface.

13. The method of claim 1 further comprising transmitting said print job to a printer to print said postal indicia (116, 119) as a function of said margin requirements test.

14. The method of claim 1 further comprising:

generating a print job for a virtualized sheet (92), wherein an image to be printed on said print media is located within a printable region of said virtualized sheet (92) as a function of printing said image closer to one or more edges of said print media than otherwise allowed by a printer for said print media.

15. A system for printing postal indicia comprising:

means for determining a printer offset as a function of how an envelope is fed for printing;
means for generating a virtualized sheet in accordance with the size of the envelope;
means for mapping an image of said postal indicia (116, 119) onto the virtualized sheet (92);
means for performing a margin requirement test on the mapped image;
means for generating a print job for the virtualized sheet (92) if the margin requirement test is satisfied, wherein an image of said postal indicia (116, 119) is located within a printable region of the virtualized sheet (92) as a function of said printer offset; and
a printer for printing said postal indicia (116, 119) onto said envelope responsive to the print job.

16. The system of claim 15 further comprising means for determining size of the virtualized sheet (92) as a function of size of the envelope.

17. The system of claim 16 wherein the means for determining said printer offset comprises means for sending a print job having one or more patterns to said printer and means for determining said printer offset as a function of how said one or more patterns print on a test envelope.

18. The system of claim 17 wherein the means for determining said printer offset comprises:

means for selecting a printer;
means for determining the offset for said printer from a printer database having information on one or more printer drivers.

19. The system of claim 18 further comprising means for rotating the image of said postal indicia (116, 119) as a function of said printable region of said virtualized sheet (92).

20. The system of claim 19 further comprising means for scaling a logo (120) as a function of said printable region of said virtualized sheet (92).

**Patentansprüche**

1. Verfahren zum Drucken postalischer Zeichen (116, 119) auf ein Druckmedium, mit den folgenden Schritten:

   Ermitteln eines Druckerversatzes in Abhängigkeit davon, wie das Druckmedium in einen Drucker eingeführt wird;
   Generieren eines virtualisierten Druckbogens entsprechend der Größe des Druckmediums;
   Projizieren eines Bildes der postalischen Zeichen (116, 119) auf den virtualisierten Druckbogen (92);
   Durchführen eines Seitenrandbedarfstests an dem projizierten Bild; und
   Generieren eines Druckauftrags für den virtualisierten Druckbogen (92), wenn der Seitenrandbedarfstest erfüllt ist, wobei sich das Bild der postalischen Zeichen (116, 119) in Abhängigkeit von dem Druckerversatz innerhalb eines bedruckbaren Bereichs des virtualisierten Druckbogens (92) befindet; und
   Drucken der postalischen Zeichen (116, 119).

2. Verfahren nach Anspruch 1, bei dem ferner die Größe des virtualisierten Druckbogens (92) in Abhängigkeit von der Größe des Druckmediums ermittelt wird.

3. Verfahren nach Anspruch 1, wobei der Schritt des Ermittelns des Druckerversatzes das Senden eines Druckauftrags mit ein oder mehr Mustern an den Drucker und das Ermitteln des Druckerversatzes in Abhängigkeit davon, wie sich eines oder mehrere dieser Muster auf ein Testdruckmedium drucken lassen, umfasst.

4. Verfahren nach Anspruch 1, wobei der Schritt des Ermittelns des Druckerversatzes Folgendes umfasst:

   Auswählen eines Druckers, und
   Ermitteln des Druckerversatzes für den Drucker anhand einer Druckerdatenbank mit Informationen über einen oder mehrere Druckertreiber.

5. Verfahren nach Anspruch 1, wobei der Schritt des Ermittelns des Druckerversatzes Folgendes umfasst:

   Auswählen eines Druckers; und
   Ermitteln des Druckerversatzes für den Drucker anhand einer Druckerdatenbank mit Informationen über einen oder mehrer Drucker.

6. Verfahren nach Anspruch 1, wobei der Schritt des Druckens der postalischen Zeichen (116, 119) das Drucken eines FIM-Barcodes (8) umfasst.

7. Verfahren nach Anspruch 1, wobei der Schritt des Druckens der postalischen Zeichen (116, 119) das Drucken eines Klartextabschnitts (114, 115) umfasst.

8. Verfahren nach Anspruch 1, wobei der Schritt des Druckens der postalischen Zeichen (116, 119) das Drucken eines zweidimensionalen Barcodeabschnitts (117) umfasst.

9. Verfahren nach Anspruch 1, bei dem ferner eine digitale Signatur in einen zweidimensionalen Barcode (117) codiert wird, wobei der Schritt des Druckens der postalischen Zeichen das Drucken des zweidimensionalen Barcodes (117) umfasst.

10. Verfahren nach Anspruch 1, bei dem ferner das Bild der postalischen Zeichen (116, 119) in Abhängigkeit von dem bedruckbaren Bereich des virtualisierten Druckbogens (92) gedreht wird.

11. Verfahren nach Anspruch 10, bei dem ferner ein Ausgangspunkt des virtualisierten Druckbogens verschoben wird und das Bild der postalischen Zeichen (116, 119) in Abhängigkeit von dem verschobenen Ausgangspunkt wiedergegeben wird.

12. Verfahren nach Anspruch 10, das ferner die folgenden Schritte umfasst:

   Durchführen eines ersten Satzes von Anpassungen an eine Zeichenfläche;
   Wiedergabe eines ersten Bestandteils der postalischen Zeichen (116, 119) gemäß dem ersten Satz von Anpassungen an die Zeichenfläche;
   Speichern der Lage eines zweiten Bestandteils der postalischen Zeichen (116, 119) gemäß dem ersten Satz von Anpassungen an die Zeichenfläche;

Durchführen eines zweiten Satzes von Anpassungen an die Zeichenfläche; und

Wiedergabe des zweiten Bestandteils der postalischen Zeichen (116, 119) gemäß dem zweiten Satz von Anpassungen an die Zeichenfläche.

13. Verfahren nach Anspruch 1, bei dem ferner der Druckauftrag zu einem Drucker übertragen wird, um die postalischen Zeichen (116, 119) in Abhängigkeit von dem Seitenrandbedarfstest zu drucken.

14. Verfahren nach Anspruch 1, das ferner den folgenden Schritt umfasst:

Generieren eines Druckauftrags für einen virtualisierten Druckbogen (92), wobei sich ein auf das Druckmedium zu druckendes Bild in einem bedruckbaren Bereich des virtualisierten Druckbogens (92) befindet, in Abhängigkeit davon, dass das Bild näher bei einem oder mehreren Rändern des Druckmediums gedruckt wird, als dies ein Drucker für das Druckmedium ansonsten erlaubt.

15. System zum Drucken postalischer Zeichen, das Folgendes umfasst:

Mittel zum Ermitteln eines Druckerversatzes in Abhängigkeit davon, wie ein Umschlag zum Drucken eingeführt wird;

Mittel zum Generieren eines virtualisierten Druckbogens entsprechend der Größe des Umschlags;

Mittel zum Projizieren eines Bildes der postalischen Zeichen (116, 119) auf den virtualisierten Druckbogen (92);

Mittel zum Durchführen eines Seitenradbedarfstests an dem projizierten Bild;

Mittel zum Generieren eines Druckauftrags für den virtualisierten Druckbogen (92), wenn der Seitenrandbedarfstest erfüllt ist, wobei sich ein Bild der postalischen Zeichen (116, 119) in Abhängigkeit von dem Druckerversatz innerhalb eines bedruckbaren Bereichs des virtualisierten Druckbogens (92) befindet; und

einen Drucker zum Drucken der postalischen Zeichen (116, 119) auf den Umschlag in Reaktion auf den Druckauftrag.

16. System nach Anspruch 15, das ferner Mittel zum Ermitteln der Größe des virtualisierten Druckbogens (92) in Abhängigkeit von der Größe des Umschlags umfasst.

17. System nach Anspruch 16, wobei das Mittel zum Ermitteln des Druckerversatzes Mittel zum Senden eines Druckauftrags mit ein oder mehr Mustern an den Drucker und Mittel zum Ermitteln des Druckerversatzes in Abhängigkeit davon, wie sich die ein oder mehr Muster auf einen Testumschlag drucken lassen, umfasst.

18. System nach Anspruch 17, wobei das Mittel zum Ermitteln des Druckerversatzes Folgendes umfasst:

Mittel zum Auswählen eines Druckers;

Mittel zum Ermitteln des Versatzes für den Drucker anhand einer Druckerdatenbank mit Informationen über einen oder mehrere Druckertreiber.

19. System nach Anspruch 18, das ferner Mittel zum Drehen des Bildes der postalischen Zeichen (116, 119) in Abhängigkeit von dem bedruckbaren Bereich des virtualisierten Druckbogens (92) umfasst.

20. System nach Anspruch 19, das ferner Mittel zum Skalieren eines Logos (120) in Abhängigkeit von dem bedruckbaren Bereich des virtualisierten Druckbogens (92) umfasst.

## Revendications

1. Procédé d'impression de signes postaux (116, 119) sur un support d'impression comprenant :

la détermination d'un offset d'imprimante comme une fonction de comment le support d'impression est alimenté dans une imprimante ;

la génération d'une feuille virtuelle conformément à la dimension du support d'impression ;

le mappage d'une image desdits signes postaux (116, 119) sur la feuille virtuelle (92) ;

l'exécution d'un test de condition de marge sur l'image mappée ; et

la génération d'une tâche d'impression pour la feuille virtuelle (92) si le test de condition de marge est satisfait, où l'image desdits signes postaux (116, 119) est située dans une région imprimable de la feuille virtuelle (92) comme une fonction dudit offset d'imprimante ; et
l'impression desdits signes postaux (116, 119).

2. Procédé selon la revendication 1, comprenant en outre la détermination de la dimension de ladite feuille virtuelle (92) comme une fonction de la dimension du support d'impression.

3. Procédé selon la revendication 1, dans lequel l'étape de détermination dudit offset d'imprimante comprend l'envoi d'une tâche d'impression avec un ou plusieurs motifs à ladite imprimante et la détermination dudit offset d'imprimante comme une fonction de comment un ou plusieurs desdits motifs s'impriment sur un support d'impression d'essai.

4. Procédé selon la revendication 1, dans lequel l'étape de détermination dudit offset d'imprimante comprend :

   la sélection d'une imprimante ; et
   la détermination de l'offset d'imprimante pour l'imprimante à partir d'une base de données d'imprimante comprenant des informations sur un ou plusieurs gestionnaires d'imprimante.

5. Procédé selon la revendication 1, dans lequel l'étape de détermination dudit offset d'imprimante comprend :

   la sélection d'une imprimante ; et
   la détermination de l'offset d'imprimante pour l'imprimante à partir d'une base de données d'imprimante comprenant des informations sur une ou plusieurs imprimantes.

6. Procédé selon la revendication 1, dans lequel l'étape d'impression desdits signes postaux (116, 119) comprend l'impression d'un FIM (8).

7. Procédé selon la revendication 1, dans lequel l'étape d'impression desdits signes postaux (116, 119) comprend l'impression d'une portion lisible par l'homme (114, 115).

8. Procédé selon la revendication 1, dans lequel l'étape d'impression desdits signes postaux (116, 119) comprend l'impression d'une portion de code à barres en deux dimensions (117).

9. Procédé selon la revendication 1, comprenant en outre le codage d'une signature numérique dans un code à barres en deux dimensions (117), dans lequel l'étape d'impression desdits signes postaux comprend l'impression dudit code à barres en deux dimensions (117).

10. Procédé selon la revendication 1, comprenant en outre la rotation de l'image desdits signes postaux (116, 119) comme une fonction de la région imprimable de ladite feuille virtuelle (92).

11. Procédé selon la revendication 10, comprenant en outre la translation d'une origine de ladite feuille virtuelle et le rendu de l'image desdits signes postaux (116, 119) comme une fonction de ladite origine translatée.

12. Procédé selon la revendication 10, comprenant en outre :

   l'exécution d'un premier ensemble de réglages pour une surface de dessin ;
   le rendu d'un premier composant desdits signes postaux (116, 119) conformément au premier ensemble de réglages pour ladite surface de dessin ;
   la mémorisation de la position d'un deuxième composant desdits signes postaux (116, 119) conformément au premier ensemble de réglages pour ladite surface de dessin ;
   l'exécution d'un deuxième ensemble de réglages pour une surface de dessin ; et
   le rendu dudit deuxième composant desdits signes postaux (116, 119) conformément au deuxième ensemble de réglages pour la surface de dessin.

13. Procédé selon la revendication 1, comprenant en outre la transmission de ladite tâche à une imprimante pour imprimer lesdits signes postaux (116, 119) comme une fonction dudit test de condition de marge.

14. Procédé selon la revendication 1, comprenant en outre :

la génération d'une tâche d'impression pour une feuille virtuelle (92), où une image à imprimer est située dans une région imprimable de ladite feuille virtuelle (92) comme une fonction de l'impression de ladite image plus près d'un ou plusieurs bords dudit support d'impression que ce n'est autrement permis par une imprimante pour ledit support d'impression.

15. Système d'impression de signes postaux comprenant :

des moyens pour déterminer un offset d'imprimante comme une fonction de comment une enveloppe est alimentée dans une imprimante ;
des moyens pour générer une feuille virtuelle conformément à la dimension de l'enveloppe ;
des moyens pour mapper une image desdits signes (116, 119) sur la feuille virtuelle (92) ;
des moyens pour exécuter un test de condition de marge sur l'image mappée ;
des moyens pour générer une tâche d'impression pour la feuille virtuelle (92) si le test de condition de marge est satisfait, où une image desdits signes postaux (116, 119) est située dans une région imprimable de la feuille virtuelle (92) comme une fonction dudit offset d'imprimante ; et
une imprimante pour imprimer lesdits signes postaux (116, 119) sur ladite enveloppe en réponse à la tâche d'impression.

16. Système selon la revendication 15, comprenant en outre des moyens pour déterminer la dimension de la feuille virtuelle (92) comme une fonction de la dimension de l'enveloppe.

17. Système selon la revendication 16, dans lequel les moyens pour déterminer ledit offset d'imprimante comprennent des moyens pour envoyer une tâche d'impression avec un ou plusieurs motifs à ladite imprimante et des moyens pour déterminer ledit offset d'imprimante comme une fonction de comment un ou plusieurs desdits motifs s'impriment sur une enveloppe d'essai.

18. Système selon la revendication 16, dans lequel les moyens pour déterminer ledit offset d'imprimante comprennent :

des moyens pour sélectionner une imprimante ;
des moyens pour déterminer l'offset pour ladite imprimante à partir d'une base de données d'imprimante comprenant des informations sur un ou plusieurs gestionnaires d'imprimante.

19. Système selon la revendication 18, comprenant en outre des moyens pour exécuter la rotation de l'image desdits signes postaux (116, 119) comme une fonction de la région imprimable de ladite feuille virtuelle (92).

20. Système selon la revendication 19, comprenant en outre des moyens pour mettre à l'échelle un logo (120) comme une fonction de ladite région imprimable de ladite feuille virtuelle (92).

FIG.1

8

STAMPS.COM
2900 31ST. ST. STE.150
SANTA MONICA, CA.90405-3035

$0.001

stamps
.com

FIRST CLASS
US POSTAGE
JUNE 15,1999

VOID

SANTA MONICA, CA.90405-3035        06280000000000

STAMPS.COM
2900 31ST. ST. STE.150
SANTA MONICA, CA.90405-3035

EP 1 221 143 B1

*FIG.2*

EP 1 221 143 B1

# FIG.3A

## FIG.3B

CLIENT-BASED AND SERVER-BASED DATABASES

INTERNET

CUSTOMER

PC

CLIENT SUPPORT
SERVER

| PRINTER GROUPS TABLE | FORMS TABLE | MEDIA GROUPS TABLE |
| --- | --- | --- |

CLIENT-BASED DATABASE

| PRINTER CONFIG GLOBAL TABLE | PRINTER CONFIGURATION INFO TABLE | PRINTER DB UPDATE TABLE |
| --- | --- | --- |

SERVER-BASED DATABASE

## FIG.4

**PRINT POSTAGE**

**RETURN ADDRESS**

22 —
REGISTERED USER'S NAME
ADDRESS
CITY, ST., ZIP +4

**DELIVERY ADDRESS**

24

RECIPIENT'S NAME
ADDRESS
CITY, ST., ZIP +4

23 — ☐ DO NOT PRINT THE RETURN ADDRESS

ADDRESS BOOK

**MAIL PIECE INFORMATION** — 25

25A —

LETTER: TEXT DESCRIPTION OF
A LETTER TYPE OF MAIL PIECE TO
BE DETERMINED — 26

PRINT ON: ENVELOPE—#10 ▼ — 27

ENTER WEIGHT: 0 ⬍ LBS. 1 ⬍ OZ. SCALE — 29

30 — SELECT A MAIL SERVICE: — 28A — 28B

31 — ✓ FIRST CLASS MAIL: $0.33
PRIORITY MAIL: $2.76
EXPRESS MAIL: $9.95

32 — AVAILABLE POSTAGE: $

**PREVIEW**

STAMPS.COM
2900 31ST. ST. STE.150
SANTA MONICA, CA.90405—3035
$0.00⅟
stamps JUNE 15, 1999
FIRST-CLASS MAIL
VOID

STAMPS.COM
2900 31ST. ST. STE.150
SANTA MONICA, CA.90405—3035

33

PRINT — 34   OPTIONS — 41   CLOSE   HELP

## FIG.5

EP 1 221 143 B1

PRINT                                                                    [?] [X]

PRINTER

NAME:          EPSON STYLUS COLOR 600    [▼]        PROPERTIES

PAPER FEED:    AUTO SHEET FEEDER         [▼]

STATUS:        IDLE

TYPE:          EPSON STYLUS COLOR 600

WHERE:         LPT1

PLEASE INSERT THE ENVELOPE INTO THE PRINTER SHORT EDGE FIRST.

THIS IS NECESSARY BECAUSE THE EPSON STYLUS
COLOR 600 PRINTER CANNOT PRINT POSTAGE
THAT CONFORMS TO USPS REGULATIONS WHEN
ENVELOPES ARE INSERTED LONG EDGE FIRST.

YOU ARE PRINTING A SAMPLE ENVELOPE.

SHORT         LONG
EDGE          EDGE

[PRINT SAMPLE]  [PRINT INTERNET POSTAGE]  [CANCEL]

## FIG.6

**PRINT POSTAGE**

**RETURN ADDRESS**

REGISTERED USER'S NAME
ADDRESS
CITY, ST., ZIP +4

☐ DO NOT PRINT THE RETURN ADDRESS

**DELIVERY ADDRESS**

| RECIPIENT'S NAME | $4.73 |
| RECIPIENT'S NAME | $4.89 — 39 |
| RECIPIENT'S NAME | $5.09 |
| RECIPIENT'S NAME | $5.31 |
| RECIPIENT'S NAME | $5.31 |

ADDRESS BOOK

**MAIL PIECE INFORMATION**

LETTER: TEXT DESCRIPTION OF A LETTER TYPE OF MAIL PIECE TO BE DETERMINED

PRINT ON: AVERY # 5643 ▼ — 27

ENTER WEIGHT: 9 ⬍ LBS. 4 ⬍ OZ. SCALE

30 — SELECT A MAIL SERVICE:

| FIRST CLASS MAIL: | $1.12 |
| PRIORITY MAIL: | $4.73 TO $5.31 |
| EXPRESS MAIL: | $13.25 TO $21.98 |

AVAILABLE POSTAGE: $
40 — COST OF MAILING: XX RECIPIENTS @ $YY.YY=$ZZZ.ZZ

**PREVIEW**

STAMPS.COM
2900 31ST. ST. STE.150
SANTA MONICA, CA.90405-3035

$0.001
stamps APR 1A 1999
VOID
FIRST-CLASS MAIL

VOID

STAMPS.COM
2900 31ST. ST. STE.150
SANTA MONICA, CA.90405-3035

PRINT — 34   OPTIONS — 41   CLOSE   HELP

EP 1 221 143 B1

## FIG.7

ENVELOPE PRINTING OPTIONS

42 — ☐ DO NOT PRINT A FACING IDENTIFICATION MARK |||||  — 43

44 — ☐ POSTDATE THE MAIL PIECE TO [05/04/99 ⬍]
— 45

46 — INDICIUM CORRECTION

48 — ☐ PRINT A POSTAGE CORRECTION [ ⬍]

50 — ☐ PRINT A DATE CORRECTION [05/04/99 ⬍]

RETURN ADDRESS — 52

[ FONT ]   LEFT MARGIN [ ⬍]

TOP MARGIN [ ⬍]

DELIVERY ADDRESS — 54

[ FONT ]   LEFT MARGIN [ ⬍]

TOP MARGIN [ ⬍]

RETURN ADDRESS GRAPHIC

76 — ☐ INCLUDE GRAPHIC [ BROWSE ]

80

82

INDICIUM GRAPHIC — 56

☐ INCLUDE GRAPHIC [ BROWSE ]

[ OK ]   [ CANCEL ]   [ HELP ]

EP 1 221 143 B1

## FIG.8

STAMPS.COM
2900 31ST. ST. STE.150
SANTA MONICA, CA.90405-3035

stamps.com

$0.00⅟

FIRST CLASS
US POSTAGE
JUNE 15,1999

VOID

SANTA MONICA, CA.90405-3035                    06280000000000

STAMPS.COM
2900 31ST. ST. STE.150
SANTA MONICA, CA.90405-3035

EP 1 221 143 B1

# FIG.9

COLLECT PRINTER SET-UP INFORMATION ─77

PERFORM MARGIN REQUIREMENTS TEST FOR STANDARD ENVELOPE PRINT JOB ─79

PASS → PRINT ENVELOPE ─81

FAIL

GENERATE VIRTUALIZED SHEET IN ACCORDANCE W/SIZE OF ENVELOPE ─83

LOCATE ENVELOPE IMAGE IN ACCORDANCE WITH PRINTER OFFSET ─85

PERFORM MARGIN REQUIREMENTS TEST ─86

PASS → RENDER ENVELOPE IMAGE ─87

SCALE LOGO ─84

PRINT ENVELOPE ─81

FAIL

ROTATE ENVELOPE IMAGE ─88

PERFORM MARGIN REQUIREMENTS TEST ─86

PASS → RENDER ENVELOPE IMAGE ─87

PRINT ENVELOPE ─81

FAIL

POSTAL INDICA CAN NOT BE PRINTED ON THIS ENVELOPE BY THIS PRINTER ─89

*FIG.10*

ENVELOPE
IMAGE
AREA

90

92

94

8

STAMPS.COM
2900 31ST. ST. STE.150
SANTA MONICA, CA.90405-3035

stamps
.com

$0.001
FIRST CLASS
US POSTAGE
JUNE 15,1999

VOID

SANTA MONICA, CA.90405-3035

06280000000000

STAMPS.COM
2900 31ST. ST. STE.150
SANTA MONICA, CA.90405-3035

## Initial Page Layout

**FIG. 11**

(x,y) coordinates - calculated from top left corner of sheet

99

leading edge - edge of sheet that feeds into printer first

top margin

89

TM

origin at leading edge (o@le)

97

RM

95

right margin

93

LM

printable region

left margin

91

BM

bottom margin

Portrait Mode

trailing edge - edge of sheet that feeds into printer last

92

*FIG.12*

## FIG.13

ORIGIN(x,y)  92

108

TOP OFFSET

ORIGIN(x,y)  92

BOTTOM OFFSET  104

ORIGIN(x,y)  92

106

CENTER OFFSET

EP 1 221 143 B1

## FIG. 14A

$0.001
FIRST CLASS
US POSTAGE
JUNE 15,1999

stamps
.com

**VOID**

SANTA MONICA, CA.90405-3035        06280000000000

## FIG. 14B

102

stamps
.com

$0.001
FIRST CLASS
US POSTAGE
JUNE 15,1999

100

**VOID**

SANTA MONICA, CA.90405-3035        06280000000000

## FIG. 14C

98

stamps
.com

$0.001
FIRST CLASS
US POSTAGE
JUNE 15,1999

96

**VOID**

SANTA MONICA, CA.90405-3035        06280000000000

## FIG. 15

103 — Bounding rect

105 — Image area

Bounding rect aspect ratio -> 8 / 4 = 2

Image area aspect ratio -> 3 / 3 = 1

Scaling factor = 4 / 3

New image area: height = 4, width = 4

## FIG.16A

MARGINS

STAMPS.COM
2900 31ST. ST. STE.150
SANTA MONICA, CA.90405-3035

stamps
.com

$0.001

FIRST CLASS
US POSTAGE
ARE

VOID

SANTA MONICA, CA.90405-3035

STAMPS.COM
2900 31ST. ST. STE.150
SANTA MONICA, CA.90405-3035

## FIG.16B

EP 1 221 143 B1

Traditional Coordinate area

+ Y-axis

Origin
(0,0)

-X-axis

+ X-axis

- Y-axis

FIG. 17A

Normalized axes without rotation

- Y-axis

FIG. 17B

Origin
(0,0)

-X-axis

+ X-axis

+ Y-axis

Normalized axes with rotation

FIG. 17C

+ Y-axis

Origin
(0,0)

+ X-axis

-X-axis

- Y-axis

# Origin with no envelope image rotation (EIR)

## FIG. 18

-Y-Axis

**(x,y) coordinates -** calculated from top left corner of printable region

To standardize the coordinate area, the Y axis flips so positive Y points down

X-Axis

109

**Origin** at leading edge (o@le)

**Leading Edge -** edge of thesheet that feeds into the printer first

printable region

+ Y-Axis

EP 1 221 143 B1

## FIG. 19

**Origin with envelope image rotation (EIR)**

+ Y-Axis

Leading Edge -
edge of the
sheet that feeds
into the printer
first

(x,y) coordinates -
calculated from
bottom right corner of
printable region

Origin not at
leading edge
(o@le)

+ X-Axis

-X-Axis

109

To standardize the
coordinate area, the
X axis flips. The +X
axis points to the left.

-Y-Axis

EP 1 221 143 B1

*FIG.20A*   VIRTUALIZATION PROCESS
FOR RIGHT—FEED PRINTERS
o@le

LEADING EDGE

ENVELOPE POSITION
FOR RIGHT FEED
PRINTER.

PRINTABLE
REGION

PORTRAIT MODE

ORIGIN(x,y)

109

*FIG.20B*

1.LANDSCAPE MODE~270°
2.o@le
3.MARGIN CHECK

110

LANDSCAPE MODE

*FIG.20C*

*FIG.20D*

WITH IMAGE ROTATION

THIS ENVELOPE SATISFIES THE FIM
REQUIREMENTS WITH NO IMAGE ROTATION.

MARGIN>1/8"

111

ENVELOPE
MARGIN

112

4.MARGIN CHECK FAILED
5.IMAGE ROTATION REQUIRED
6.ORIGIN SHIFTS DIAGONALLY

4.MARGIN CHECK PASSED
5.NO IMAGE ROTATION REQUIRED
6.NO ORIGIN SHIFTS REQUIRED

## FIG.20E

ORIGIN(x,y)

109

110

1.LANDSCAPE MODE-90°
2.!o@le
3.MARGIN CHECK

LANDSCAPE MODE

## FIG.20F

WITH IMAGE ROTATION

ENVELOPE
MARGIN

MARGIN>1/8"

4.MARGIN CHECK FAILED
5.IMAGE ROTATION REQUIRED
6.ORIGIN SHIFTS DIAGONALLY

## FIG.20G

THIS ENVELOPE SATISFIES THE FIM
REQUIREMENTS WITH NO IMAGE ROTATION.

VOID

4.MARGIN CHECK PASSED
5.NO IMAGE ROTATION REQUIRED
6.NO ORIGIN SHIFTS DIAGONALLY

## FIG.21A  VIRTUALIZATION PROCESS FOR LEFT-FEED PRINTERS
o@le

LEADING EDGE

ENVELOPE POSITION FOR LEFT FEED PRINTER.

PRINTABLE REGION

PORTRAIT MODE

ORIGIN(x,y)

109

## FIG.21B

1.LANDSCAPE MODE-270°
2.o@le
3.MARGIN CHECK

110

LANDSCAPE MODE

## FIG.21C

WITH IMAGE ROTATION

ENVELOPE MARGIN

MARGIN>1/8"

4.MARGIN CHECK FAILED
5.IMAGE ROTATION REQUIRED
6.ORIGIN SHIFTS DIAGONALLY

## FIG.21D

THIS ENVELOPE SATISFIES THE FIM REQUIREMENTS WITH NO IMAGE ROTATION.

4.MARGIN CHECK PASSED
5.NO IMAGE ROTATION REQUIRED
6.NO ORIGIN SHIFTS REQUIRED

## FIG.21E

ORIGIN(x,y)

109

110

1.LANDSCAPE MODE-90°
2.!o@le
3.MARGIN CHECK

## FIG.21F

WITH IMAGE ROTATION

MARGIN>1/8"

ENVELOPE
MARGIN

4.MARGIN CHECK FAILED
5.IMAGE ROTATION REQUIRED
6.ORIGIN SHIFTS DIAGONALLY

## FIG.21G

THIS ENVELOPE SATISFIES THE FIM
REQUIREMENTS WITH NO IMAGE ROTATION.

4.MARGIN CHECK PASSED
5.NO IMAGE. ROTATION REQUIRED
6.ORIGIN SHIFTS ACROSS

## FIG.22A

VIRTUALIZATION PROCESS
FOR CENTER-FEED PRINTERS
o@le

LEADING EDGE

ENVELOPE POSITION
FOR CENTER FEED
PRINTER.

PRINTABLE
REGION

PORTRAIT MODE

## FIG.22B

ORIGIN(x,y)

109

1.LANDSCAPE MODE-270°
2.o@le
3.MARGIN CHECK

110

LANDSCAPE MODE

## FIG.22C

WITH IMAGE ROTATION

ENVELOPE
MARGIN

4.IMAGE ROTATION REQUIRED
5.ORIGIN SHIFTS DOWNWARD

## FIG.22D

THIS ENVELOPE SATISFIES THE FIM
REQUIREMENTS WITH NO IMAGE ROTATION.

4.NO IMAGE ROTATION REQUIRED
5.ORIGIN SHIFTS DOWNWARD

## FIG.22E

ORIGIN(x,y)

109

110

1.LANDSCAPE MODE-90°
2.!o@le
3.MARGIN CHECK

## FIG.22F

WITH IMAGE ROTATION

4.MARGIN CHECK FAILED
5.IMAGE ROTATION REQUIRED
6.ORIGIN SHIFTS DIAGONALLY

## FIG.22G

THIS ENVELOPE SATISFIES THE FIM
REQUIREMENTS WITH NO IMAGE ROTATION.

MARGIN>1/8"

ENVELOPE
MARGIN

4.MARGIN CHECK PASSED
5.NO IMAGE ROTATION REQUIRED
6.ORIGIN SHIFTS ACROSS

# FIG.23

JOES'S FLYING LESSONS
123 AIRPORT DRIVE
SANTA MONICA, CA.90405

iShip

stamps.com

$0.33
JAN 01 2000
VOID
FIRST-CLASS MAIL
SANTA MONICA, CA.90405

VOID

STAMPS.COM                    0628000000000

LORETTA SMITH
3420 OCEAN PARK BLVD.
SANTA MONICA, CA.90405

EP 1 221 143 B1

## FIG.24

JOES'S FLYING LESSONS
123 AIRPORT DRIVE
SANTA MONICA, CA.90405

$0.33
JAN 01 2000
VOID
FIRST-CLASS MAIL
SANTA MONICA, CA.90405

STAMPS.COM                    06280000000000

LORETTA SMITH
3420 OCEAN PARK BLVD.
SANTA MONICA, CA.90405

EP 1 221 143 B1

FIG.25

GETTING STARTED WIZARD—PRINT SETUP WIZARD COMPONENT

## FIG.26
PRINTER #1 SELECT DEFAULT PRINTER

121

**stamps**
.com

| PRINTER BANNER GRAPHIC |

1.START

2. REGISTER WITH
STAMPS.COM

3. APPLY FOR A
POSTAL METER

**4. TEST PRINTER**

5. FINISH

PLEASE SELECT A DEFAULT PRINTER TO BE USED FOR PRINTING POSTAGE.

DEFAULT PRINTER: [                    ▼] —155

IN ORDER TO ENSURE THAT THE SELECTED PRINTER IS ABLE TO
PRINT IN ACCORDANCE WITH USPS REQUIREMENTS, WE WILL
NEED TO PRINT ONE OR MORE SAMPLE PIECES OF POSTAGE AS
WELL AS A REAL PIECE OF POSTAGE.

SELECT "NEXT" TO CONTINUE.

[ <BACK ]  [ NEXT> ]  [ CANCEL ]

—156

## FIG.27
PRINTER #2 PRINT ONTO

122

**stamps**
.com

| PRINTER BANNER GRAPHIC |

1.START

2. REGISTER WITH
STAMPS.COM

**3. APPLY FOR A
POSTAL METER**

4. TEST PRINTER

5. FINISH

SELECT THE SIZE OF THE ENVELOPES THAT THE POSTAGE
WILL BE PRINTED ONTO.

PRINT ONTO: [                    ▼] —157

WOULD YOU LIKE THE RETURN ADDRESS TO BE PRINTED ON THESE
ENVELOPES? (SELECT NO IF YOU ARE USING ENVELOPES WITH
A PREPRINTED RETURN ADDRESS)

◉ YES —158
◯ NO —159

[ <BACK ]  [ NEXT> ]  [ CANCEL ]

—160

## FIG.28
### PRINTER #3 INSERT ENVELOPE

128

**stamps.com**

1. START

2. REGISTER WITH STAMPS.COM

3. APPLY FOR A POSTAL METER

4. TEST PRINTER

5. FINISH

PRINTER BANNER GRAPHIC

MAKE SURE THAT AN ENVELOPE IS PLACED IN YOUR PRINTER FEEDER, AND SELECT "NEXT" TO PRINT A SAMPLE PIECE OF POSTAGE ONTO THE ENVELOPE.

162

| <BACK | NEXT> | CANCEL |

164

## FIG.29
### PRINTER #4 COMPARE SAMPLE

132

**stamps.com**

1. START

2. REGISTER WITH STAMPS.COM

3. APPLY FOR A POSTAL METER

4. TEST PRINTER

5. FINISH

PRINTER BANNER GRAPHIC

PLEASE COMPARE THE SAMPLE PIECE OF POSTAGE TO THE ENVELOPE SHOWN IN THE GRAPHIC BELOW. DID YOUR SAMPLE CORRECTLY PRINT ITEMS 1 THROUGH 5 SHOWN BELOW?

171    167

STAMPS.COM
2900 31ST. ST. STE.150
SANTA MONICA, CA.90405-3035

$0.00
JUNE 15, 1999
VOID
FIRST-CLASS MAIL

VOID

169

STAMPS.COM
2900 31ST. ST. STE.150
SANTA MONICA, CA.90405-3035

166

○ YES    ○ NO          170

168    | <BACK | NEXT> | CANCEL |

172

## FIG.30
PRINTER #5 PRINT QA ENV.

142—

| stamps.com | PRINTER BANNER GRAPHIC |
|---|---|
| 1.START | NEXT, THE WIZARD WILL PRINT AN ACTUAL PIECE OF POSTAGE. |
| 2. REGISTER WITH STAMPS.COM | THE USPS REQUIRES THAT YOU MAIL IN THIS ACTUAL PIECE POSTAGE SO THAT THE USPS CAN CONFIRM THAT YOUR PRINTER PRINTS POSTAGE THAT MEETS THEIR SPECIFICATIONS. THIS IS REFERRED TO AS A "QUALITY ASSURANCE" ENVELOPE. —174 |
| 3. APPLY FOR A POSTAL METER | MAKE SURE THAT AN ENVELOPE IS PLACED IN YOUR PRINTERS FEED TRAY, THEN SELECT "NEXT" TO PRINT A QUALITY ASSURANCE ENVELOPE. |
| 4. TEST PRINTER | |
| 5. FINISH | —176 |
| | NOTE: SINCE THE QUALITY ASSURANCE ENVELOPE MUST INCLUDE VALID POSTAGE(BY USPS REGULATIONS), YOUR ACCOUNT WILL BE DEBITED FOR THIS POSTAGE. |

<BACK    NEXT>    CANCEL

—178    146—

## FIG.31
PRINTER #6 MAIL QA ENV.

| stamps.com | PRINTER BANNER GRAPHIC |
|---|---|
| 1.START | IT IS IMPORTANT THAT YOU PLACE THE QUALITY ASSURANCE ENVELOPE INTO A MAILBOX. IF YOU DO NOT MAIL IN THIS ENVELOPE YOUR METER MAY BE REVOKED BY THE USPS. |
| 2. REGISTER WITH STAMPS.COM | MAIL |
| 3. APPLY FOR A POSTAL METER | —180 |
| 4. TEST PRINTER | |
| 5. FINISH | |

<BACK    NEXT>    CANCEL

—182

## FIG.32

FINISH #1 CONGRATS

**stamps.com**

1.START

2. REGISTER WITH STAMPS.COM

3. APPLY FOR A POSTAL METER

4. TEST PRINTER

5. FINISH

FINISH BANNER GRAPHIC

CONGRATULATIONS! YOU HAVE COMPLETED ALL OF THE STEPS REQUIRED TO BEGIN PRINTING POSTAGE. SELECT "FINISH" TO ENTER THE SOFTWARE AND BEGIN PRINTING POSTAGE DIRECTLY FROM YOUR PO.

| <BACK | FINISH | CANCEL |

## FIG.34

PRINTER CONFIGURATION

START

SERVICE SIGN-UP

USPS POSTAGE LICENSE APPLICATION

TEST PRINTER

FINISH

**TEST PRINTER**   **stamps.com**

YOU WILL NOW PRINT A SAMPLE ENVELOPE IN ORDER TO DETERMINE WHETHER OR NOT YOUR PRINTER CAN ACCURATELY PRINT POSTAGE. — 183 MAKE SURE YOU HAVE AN ENVELOPE LOADED IN YOUR PRINTER AND THEN SELECT "NEXT". A SAMPLE ENVELOPE WILL BE PRINTED.

PLEASE LOAD THE ENVELOPE SHORT EDGE FIRST.

SHORT EDGE    LONG EDGE

| <BACK | NEXT> | CANCEL | HELP |

## FIG.33

GETTING STARTED WIZARD–PRINT CONFIG WIZARD COMPONENT

TRY AGAIN

PRINTER #3
INSERT
ENVELOPE
*184*

*186* PRINT
TEST ENV.

PRINTER #7
WHAT PRINTED
ONTO ENV.
*188*

WHAT
PRINTED ONTO THE
ENVELOPE
?

NOTHING

PRINTER #8
TROUBLESHOOT
OPTIONS
*194*

HOW TO
PROCEED
?

NEW
PRINTER

NEITHER

RETURN TO
PRINTER SETUP
SELECT PRINTER

CIRCLE, SQUARE, OR TRIANGLE

SAVE
SHIFT
DATA
*192*

*206* DISABLE
PRINT
ENV.

CONTINUE
WITH PRINT
QA ENV

PRINTER #9
SORRY, NO
ENV. PRINTING

LAUNCH
SOFTWARE

EP 1 221 143 B1

# *FIG.35*

AVAILABLE PATTERNS VIRTUALIZED ON A SHEET OF PAPER

o@le                                    !o@le

ORIGIN

LEADING
EDGE

ORIGIN

LEADING
EDGE

AN ENVELOPE WITH A CIRCLE PATTERN INDICATES A TOP-FEED PRINTER

TOP
FEED

TOP
FEED

# FIG.36

AVAILABLE PATTERNS VIRTUALIZED ON A SHEET OF PAPER

o@le                                       !o@le

ORIGIN

LEADING
EDGE

ORIGIN

LEADING
EDGE

AN ENVELOPE WITH A SQUARE PATTERN INDICATES A CENTER-FEED PRINTER

CENTER
FEED

CENTER
FEED

# *FIG.37*

BOTTOM
FEED

AVAILABLE PATTERNS VIRTUALIZED ON A SHEET OF PAPER
o@le                                    !o@le

ORIGIN
LEADING
EDGE

ORIGIN
LEADING
EDGE

AN ENVELOPE WITH A TRIANGLE PATTERN INDICATES A BOTTOM-FEED PRINTER

BOTTOM
FEED

BOTTOM
FEED

## FIG.38
PRINTER #7 WHAT PRINTED ONTO ENVELOPE

**stamps.com**

1. START

2. REGISTER WITH STAMPS.COM

3. APPLY FOR A POSTAL METER

4. TEST PRINTER

5. FINISH

PRINTER BANNER GRAPHIC

EXAMINE THE SAMPLE ENVELOPE THAT JUST PRINTED. SELECT THE SHAPE THAT PRINTED COMPLETELY ON THE ENVELOPE. ——188

◉ ☐ ——190

○ ◯

○ △

◎ NONE OF THE ABOVE MATCH WHAT I SEE.

[ <BACK ]  [ NEXT> ]  [ CANCEL ]

## FIG.39
PRINTER #8 TROUBLESHOOT OPTIONS

194

**stamps.com**

1. START

2. REGISTER WITH STAMPS.COM

3. APPLY FOR A POSTAL METER

4. TEST PRINTER

5. FINISH

PRINTER BANNER GRAPHIC

YOUR PRINTER MAY HAVE A PROBLEM PRINTING POSTAGE ON ENVELOPES. TRY ONE OF THESE SOLUTIONS:

◉ TRY PRINTING ANOTHER SAMPLE ——196
198 ○ TRY PRINTING ANOTHER SAMPLE WITH A DIFFERENT PRINTER
200 ○ NEITHER OF THESE SOLUTIONS WORK

[ <BACK ]  [ NEXT> ]  [ CANCEL ]

## *FIG.40*

200

PRINTER #9 SORRY, NO ENVELOPE PRINTING

**stamps.com**

PRINTER BANNER GRAPHIC

1.START

2. REGISTER WITH
   STAMPS.COM

3. APPLY FOR A
   POSTAL METER

4. TEST PRINTER

5. FINISH

SORRY, YOUR PRINTER DOES NOT MEET UNITED STATES POSTAL
SERVICE REQUIREMENTS.

202

INSERT CURRENT TEXT FROM PRINT TEST.

[ <BACK ]   [ NEXT> ]   [ CANCEL ]

204

**EP 1 221 143 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4862385 A
- US 16399398 A, Mohan Ananda